# EUROPEAN PATENT APPLICATION

(11) **EP 4 524 726 A1**
(43) Date of publication of application: **19.03.2025**
(21) Application number: 23826526.8
(22) Date of filing: 21.06.2023
(51) Int. Cl.: G06F 8/61, H04L 67/30, G06F 9/445

(54) **PLUG-IN CONTROL METHOD AND SYSTEM AND RELATED APPARATUS**

(30) Priority: 25.06.2022 CN 202210731708; 30.09.2022 CN 202211213905
(71) Applicant: Huawei Technologies Co., Ltd., Shenzhen, Guangdong 518129 (CN)
(72) Inventor: CHEN, Lei, Shenzhen, Guangdong 518129 (CN)
(74) Representative: Isarpatent
(86) International application number: PCT/CN2023/101769
(87) International publication number: WO 2023/246881

(57) **Abstract**

This application discloses a plugin control method and system, and a related apparatus. A specified application may be installed on each of an electronic device and another device. The electronic device may receive an input of a user, and download specified plugins for implementing a same cross-device function to the electronic device and the another device through the specified applications respectively. The electronic device may run a downloaded specified plugin through a local specified application, and indicate the another device to also run a downloaded specified plugin through an installed specified application. The electronic device may implement the cross-device function through the local specified plugin and the specified plugin on the another device. In this way, the user may trigger, on the electronic device and for both the electronic device and the another device, downloading of the plugins for implementing the specified cross-device function, and the user can quickly implement the cross-device function with the another device.

## Description

This application claims priorities to Chinese Patent Application No. 202210731708.9, filed with the China National Intellectual Property Administration on June 25, 2022 and entitled "CHANNEL RESOURCE CONTENTION METHOD", and to Chinese Patent Application No. 202211213905.8, filed with the China National Intellectual Property Administration on September 30, 2022 and entitled "PLUGIN CONTROL METHOD AND SYSTEM, AND RELATED APPARATUS", both of which are incorporated herein by reference in their entireties.

### TECHNICAL FIELD

This application relates to the field of electronic device technologies, and in particular, to a plugin control method and system, and a related apparatus.

### BACKGROUND

An electronic device may provide services for a user through various applications (applications, APPs). As user requirements increase, application functions are increasingly powerful. As a result, application scales are increasingly large. To quickly respond to the requirements, plugin-based application development is increasingly required. A plugin-based application is used, so that a size of an installation package of the application can be reduced. The user can download a plugin as required. An application and a plugin are compiled separately, so that development efficiency is improved.

Currently, plugin-based applications are used in some operating systems. For example, an electronic device like a mobile phone or a tablet may download, on a specified application, a plugin corresponding to a target device (for example, a ground-scanning robot), and control the target device by running the plugin on the specified application. A manufacturer of the target device is responsible for developing, testing, releasing, and maintaining the plugin. However, electronic device manufacturers are limited, but a quantity of manufacturers and a quantity of device types of target devices are very large, and the target devices are updated and replaced rapidly. Therefore, it is difficult for a manufacturer of an electronic device to predefine, before device delivery, complete control interfaces for various types of target devices that need to be controlled by the electronic device, and consequently, functions that can be implemented between the electronic device and the target devices are limited.

### SUMMARY

This application provides a plugin control method and system, and a related apparatus, so that a user can trigger, on an electronic device, for both the electronic device and another device, downloading of plugins for implementing a specified cross-device function, and the user can quickly implement the cross-device function with the another device.

According to a first aspect, this application provides a plugin control method, applied to a first electronic device on which a first application is run, and including: receiving a first operation that a user selects the first electronic device and a second electronic device to execute a first cross-device function, where a first plugin combination for the first cross-device function includes a first plugin for which running is supported by the first application and a second plugin for which running is supported by a second application installed on the second electronic device; in response to the first operation, sending a first download request to a plugin server and sending plugin information of the second plugin to the second electronic device, where the first download request is used to request to download the first plugin, and the plugin information of the second plugin is used by the second electronic device to download the second plugin from the plugin server; receiving the first plugin sent by the plugin server; after receiving the first plugin, starting and running the first plugin through the first application; and executing the first cross-device function through the first plugin and the second plugin that is started and run through the second application on the second electronic device.

According to a plugin control method provided in this application, a specified application may be installed on each of an electronic device and another device. The electronic device may receive an input of a user, and download specified plugins for implementing a same cross-device function to the electronic device and the another device through the specified applications respectively. The electronic device may run a downloaded specified plugin through a local specified application, and indicate the another device to also run a downloaded specified plugin through an installed specified application. The electronic device may implement the cross-device function through the local specified plugin and the specified plugin on the another device. In this way, the user may trigger, on the electronic device and for both the electronic device and the another device, downloading of the plugins for implementing the specified cross-device function, and the user can quickly implement the cross-device function with the another device.

For example, when a parent is away from home, and needs to play an interactive game with a child at home, the parent may open, on a mobile phone of the parent, a specified application (for example, an AI life application) that supports running of a plugin, and select a plugin combination of an interactive game from a plugin combination list of a cross-device function of the specified application. After the specified game is selected and a large-screen device at home is selected, a plugin of the interactive game may be downloaded on each of the phone and the large-screen device. A plugin on the mobile phone and a plugin on the large-screen device may be run through respective specified applications and perform networking connection, to play the interactive game. In this way, operations of the user can be reduced, and it is convenient for the user to interact with a family member in real time when the user is away from home.

For another example, when the user is away from home, and needs to view a real-time image at home, the user may open, on a mobile phone of the user, a specified application (for example, an AI life application) that supports running of a plugin, and select a plugin combination for a real-time home scene function from a plugin combination list of a cross-device function of the specified application. After a large-screen device at home is selected to collect a real-time image and/or sound, a plugin of the real-time home scene function may be downloaded on each of the mobile phone and the large-screen device. A plugin on the mobile phone and a plugin on the large-screen device may be run through respective specified applications and perform networking connection. The plugin on the large-screen device may send, to the plugin on the mobile phone, an image and/or a sound collected by the large-screen device. The plugin on the mobile phone may control the mobile phone to output the image and/or the sound collected by the large-screen device. In this way, operations of the user can be reduced, and it is convenient for the user to view a situation at home in real time when the user is away from home.

In a possible implementation, before the receiving a first operation that a user selects the first electronic device and a second electronic device to execute a first cross-device function, the method further includes: obtaining device information of a to-be-networked device, where the to-be-networked device includes the first electronic device and the second electronic device; sending the device information of the to-be-networked device to the plugin server; receiving plugin combination information of one or more specified cross-device functions sent by the plugin server, where the one or more specified cross-device functions include the first cross-device function; and displaying the plugin combination information of the one or more specified cross-device functions. In this way, the first electronic device may match, from the plugin server, the cross-device function supported by the to-be-networked device, to implement precise push of a plugin combination for the cross-device function.

In a possible implementation, after the sending plugin information of the second plugin to the second electronic device, the method further includes: receiving a download assistance request sent by the second electronic device, where the download assistance request is used to request the first electronic device to download the second plugin and forward the second plugin to the second electronic device; sending a third download request to the plugin server, where the third download request is used to request to download the second plugin; receiving the second plugin sent by the plugin server; and sending the second plugin to the first electronic device. In this way, the first electronic device may assist the second electronic device in downloading the plugin, so that the plugin on the second electronic device can be downloaded only through the first electronic device.

In a possible implementation, before the executing the first cross-device function through the first plugin and the second plugin that is on the second electronic device, the method includes: receiving feedback information sent by the second electronic device, where the feedback information indicates that the second electronic device has obtained the second plugin. In this way, the first electronic device can accurately learn in time that the plugin is prepared on the second electronic device.

In a possible implementation, after the receiving feedback information sent by the second electronic device, the method further includes: sending a first start notification to the second electronic device, where the first start notification indicates the second electronic device to start and run the second plugin. In this way, the first electronic device may remotely start the second plugin on the second electronic device, to reduce an operation of starting and running the second plugin by the user.

In a possible implementation, before the executing the first cross-device function through the first plugin and the second plugin that is started and run through the second application on the second electronic device, the method further includes: completing networking authentication through the first plugin and the second plugin; and establishing a networking connection through the first plugin and the second plugin. In this way, it can be ensured that the networking connection is established only after the first electronic device and the second electronic device authenticate each other as legal devices. This ensures security of communication between the first plugin and the second plugin.

In a possible implementation, the executing the first cross-device function through the first plugin and the second plugin that is started and run through the second application on the second electronic device specifically includes: receiving, through the first plugin, environment information that is collected by the second electronic device in real time through a camera and/or a microphone and that is sent by the second plugin, where the environment information includes any one of the following: an audio stream, an image stream, and a video stream; and controlling, through the first plugin, the first electronic device to output the environment information. In this way, the user can view, on the first electronic device, the environment information around the second electronic device without performing an operation on the second electronic device.

In a possible implementation, the sending a first download request to a plugin server and sending plugin information of the second plugin to the second electronic device, in response to the first operation specifically includes: in response to the first operation, if it is determined that the first plugin is not cached on the first electronic device, sending the first download request to the plugin server, and sending the plugin information of the second plugin to the second electronic device. This may prevent the first electronic device from repeatedly downloading the first plugin, to save storage resources and download resources.

In a possible implementation, the method further includes: in response to the first operation, if it is determined that the first plugin is cached on the first electronic device, sending the plugin information of the second plugin to the second electronic device.

In a possible implementation, after the executing the first cross-device function through the first plugin and the second plugin that is started and run through the second application on the second electronic device, the method further includes: locally deleting the first plugin. In this way, the used plugin can be deleted in time, to save storage space.

In a possible implementation, after the executing the first cross-device function through the first plugin and the second plugin that is started and run through the second application on the second electronic device, the method further includes: sending a deletion notification to the second electronic device, where the deletion notification indicates the second electronic device to delete the second plugin. In this way, the used plugin can be deleted in time, to save storage space.

In this embodiment of this application, the first electronic device may discover the second electronic device near the first electronic device by using a near field communication technology (for example, Wi-Fi, Bluetooth, NFC, UWB, or infrared). In an example, the first electronic device may alternatively discover the second electronic device in a local area network in which the electronic device is located. In an example, both the first electronic device and the second electronic device are connected to the server, and the first electronic device may discover, through the server, the second electronic device that has been online. The second electronic device and the first electronic device may log in to a same account, or a login account of the second electronic device is bound to a login account of the first electronic device, or the like.

According to a second aspect, this application provides a plugin control system, including: a plugin server, a first electronic device, and a second electronic device, where a first application is run on the first electronic device, and a second application is run on the second electronic device; the plugin server is configured to store a plugin combination for a plurality of cross-device functions, where the plugin combination includes a plugin of one or more versions, the plurality of cross-device functions include a first cross-device function, and a first plugin combination for the first cross-device function includes a first plugin for which running is supported by the first application and a second plugin for which running is supported by the second application; the first electronic device is configured to receive a first operation that a user selects the first electronic device and the second electronic device to execute the first cross-device function; the first electronic device is further configured to: in response to the first operation, send a first download request to the plugin server, and send plugin information of the second plugin to the second electronic device, where the first download request is used to request to download the first plugin; the plugin server is further configured to: after receiving the first download request, send the first plugin to the first electronic device; the second electronic device is configured to: after receiving the plugin information of the second plugin, send a second download request to the plugin server, where the second download request is used to request to download the second plugin; the plugin server is further configured to: after receiving the second download request, send the second plugin to the second electronic device; the first electronic device is further configured to: after receiving the first plugin, start and run the first plugin through the first application; the second electronic device is further configured to: after receiving the second plugin, start and run the second plugin through the second application; and the first electronic device is further configured to execute the first cross-device function through the first plugin and the second plugin.

In a possible implementation, the first electronic device is further configured to obtain device information of a to-be-networked device before receiving the first operation that the user selects the first electronic device and the second electronic device to execute the first cross-device function, where the to-be-networked device includes the first electronic device and the second electronic device; the first electronic device is further configured to send the device information of the to-be-networked device to the plugin server; the plugin server is further configured to determine, from the plugin combination for the plurality of cross-device functions based on the device information of the to-be-networked device, a plugin combination for one or more specified cross-device functions supported by the to-be-networked device, where the plugin combination for the one or more specified cross-device function includes the first plugin combination for the first cross-device function; the plugin server is further configured to send plugin combination information of the one or more specified cross-device functions to the first electronic device; and the first electronic device is further configured to display the plugin combination information of the one or more specified cross-device functions.

In a possible implementation, the second electronic device is specifically configured to: after receiving the plugin information of the second plugin, if it is determined that the second plugin is not cached on the second electronic device and the second electronic device has a capability of downloading a plugin over the internet, send the second download request to the plugin server.

In a possible implementation, the second electronic device is further configured to: after receiving the plugin information of the second plugin, if it is determined that the second plugin is not cached on the second electronic device and the second electronic device does not have the capability of downloading a plugin over the internet, send a download assistance request to the first electronic device, where the download assistance request is used to request the first electronic device to download the second plugin and forward the second plugin to the second electronic device; the first electronic device is further configured to: after receiving the download assistance request, send a third download request to the plugin server, where the third download request is used to request to download the second plugin; the plugin server is further configured to: after receiving the third download request, send the second plugin to the first electronic device; and the first electronic device is further configured to: after receiving the second plugin, send the second plugin to the second electronic device.

In a possible implementation, the second electronic device is further configured to: after receiving the plugin information of the second plugin, if it is determined that the second plugin is cached on the second electronic device, send feedback information to the first electronic device, where the feedback information indicates that the second electronic device has obtained the second plugin.

In a possible implementation, the second electronic device is further configured to: after receiving the second plugin, send feedback information to the first electronic device, where the feedback information indicates that the second electronic device has obtained the second plugin.

In a possible implementation, the first electronic device is further configured to: after receiving the feedback information, send a first start notification to the second electronic device, where the first start notification indicates the second electronic device to start and run the second plugin; and the second electronic device is specifically configured to: after receiving the first start notification, start and run the second plugin through the second application.

In a possible implementation, the first electronic device is further configured to complete networking authentication through the first plugin and the second plugin before the first cross-device function is executed through the running first plugin and the second plugin that is run on the second electronic device; and the first electronic device is further configured to establish a networking connection through the first plugin and the second plugin after the networking authentication is completed through the first plugin and the second plugin.

In a possible implementation, the executing the first cross-device function through the first plugin and the second plugin specifically includes: The second plugin controls the second electronic device to collect environment information in real time through a camera and/or a microphone, where the environment information includes any one of the following: an audio stream, an image stream, and a video stream; the second plugin sends, to the first plugin, the environment information collected by the second electronic device in real time through the camera and/or the microphone; and the first plugin controls the first electronic device to output the environment information.

In a possible implementation, the first electronic device is specifically configured to: in response to the first operation, if it is determined that the first plugin is not cached on the first electronic device, send the first download request to the plugin server, and send the plugin information of the second plugin to the second electronic device.

In a possible implementation, the first electronic device is further configured to: in response to the first operation, if it is determined that the first plugin is cached on the first electronic device, send the plugin information of the second plugin to the second electronic device.

In a possible implementation, the first electronic device is further configured to locally delete the first plugin after executing the first cross-device function through the first plugin and the second plugin.

In a possible implementation, the first electronic device is further configured to send a deletion notification to the second electronic device after executing the first cross-device function through the first plugin and the second plugin, where the deletion notification indicates the second electronic device to delete the second plugin; and the second electronic device is further configured to delete the second plugin after receiving the deletion notification.

According to a third aspect, this application provides an electronic device, where the electronic device is a first electronic device, including a transceiver, one or more processors, and one or more memories. The transceiver and the one or more memories are coupled to the one or more processors. The one or more memories are configured to store computer program code. The computer program code includes computer instructions. When the one or more processors execute the computer instructions, a communication apparatus is enabled to perform the plugin control method according to any possible implementation of the foregoing aspects.

According to a fourth aspect, embodiments of this application provide a computer storage medium, including computer instructions. When the computer instructions are run on an electronic device, the electronic device is enabled to perform the plugin control method according to any possible implementation of the foregoing aspects.

According to a fifth aspect, embodiments of this application provide a computer program product. When the computer program product runs on a computer, the computer is enabled to perform the plugin control method according to any possible implementation of the foregoing aspects.

For beneficial effects of the second aspect to the fifth aspect, refer to the beneficial effects according to the first aspect and any one of the possible implementations of the first aspect. Details are not described herein again.

### BRIEF DESCRIPTION OF DRAWINGS

FIG. 1 is a diagram of a plugin use strategy according to an embodiment of this application;
FIG. 2 is a schematic flowchart of cross-device interaction according to an embodiment of this application;
FIG. 3 is a diagram of a system architecture of a plugin-based application according to an embodiment of this application;
FIG. 4 is a diagram of a principle of a plugin control method according to an embodiment of this application;
FIG. 5A is a diagram of a structure of an electronic device according to an embodiment of this application;
FIG. 5B is a block diagram of a software structure of an electronic device according to an embodiment of this application;
FIG. 5C-1 and FIG. 5C-2 are a diagram of an architecture of a communication system according to an embodiment of this application;

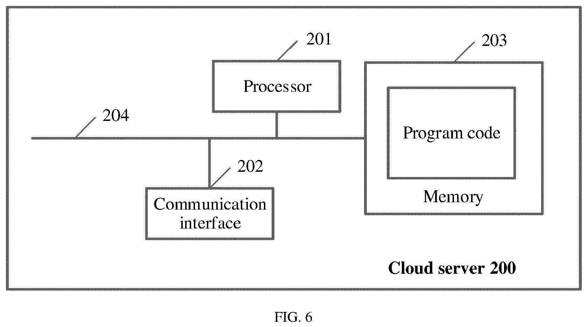

FIG. 6 is a diagram of a hardware structure of a cloud server according to an embodiment of this application;

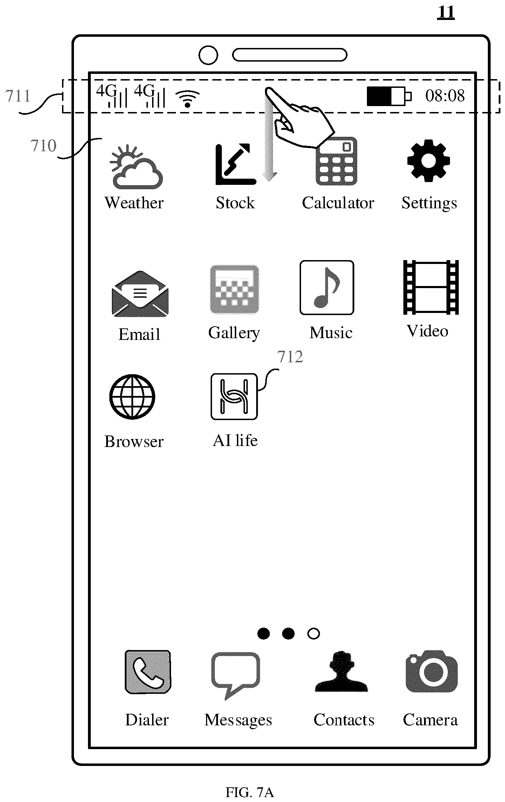

FIG. 7A to FIG. 7J are diagrams of a group of interfaces of a plugin control method according to an embodiment of this application;

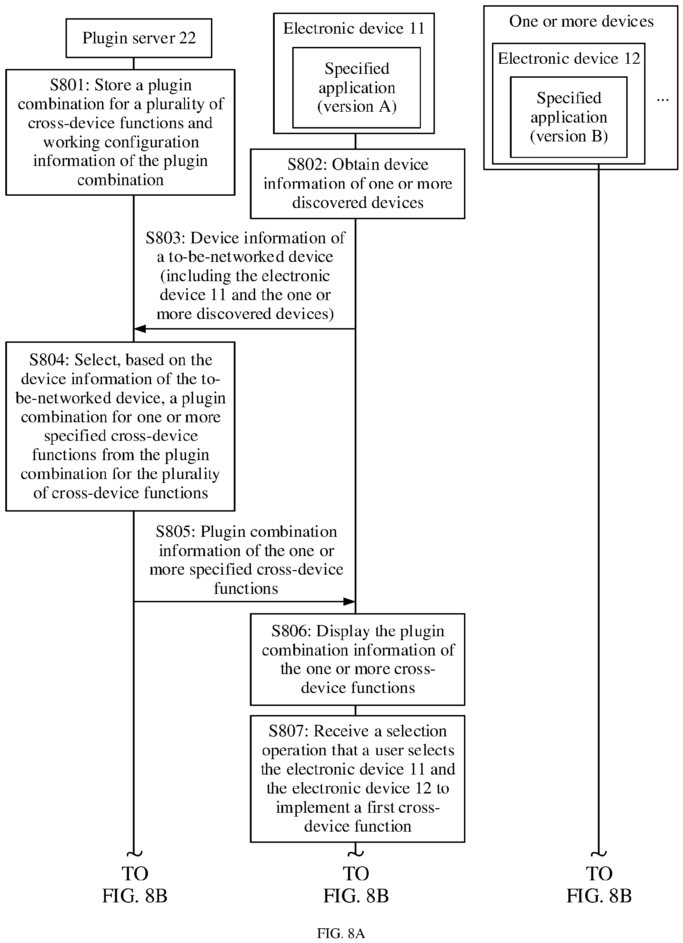

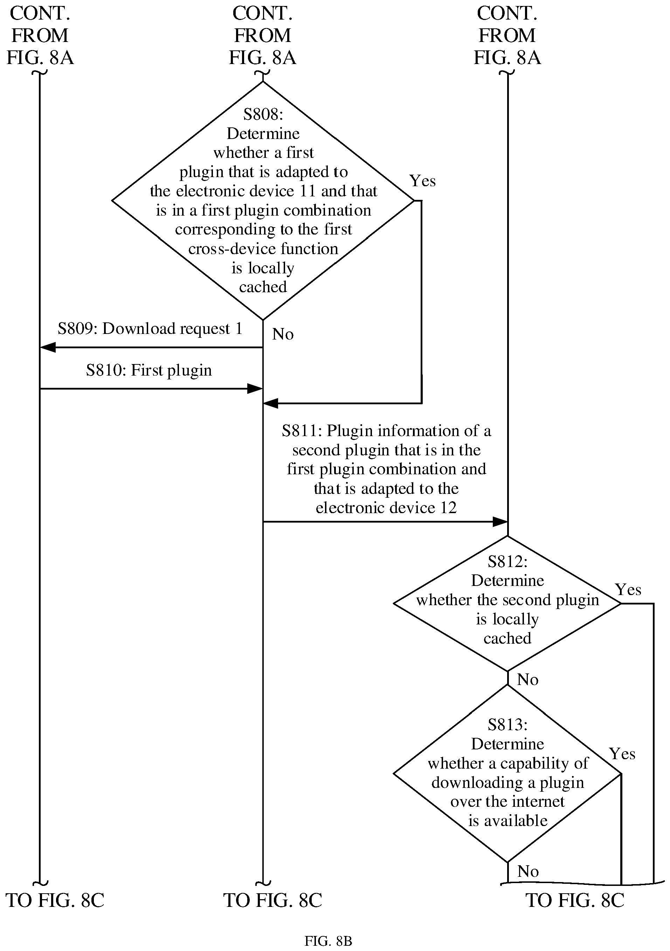

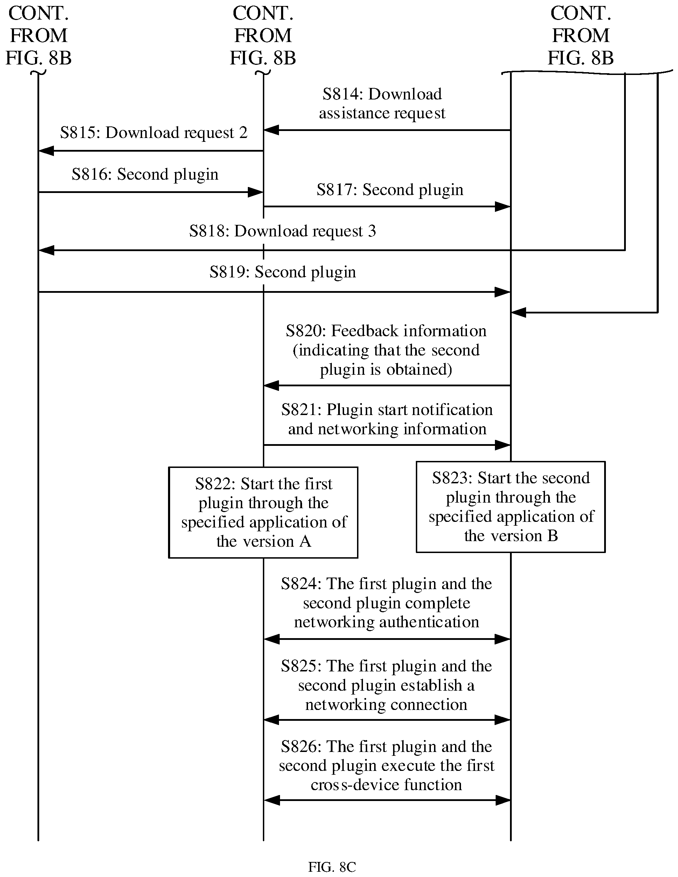

FIG. 8A to FIG. 8C are a schematic flowchart of a plugin control method according to an embodiment of this application;

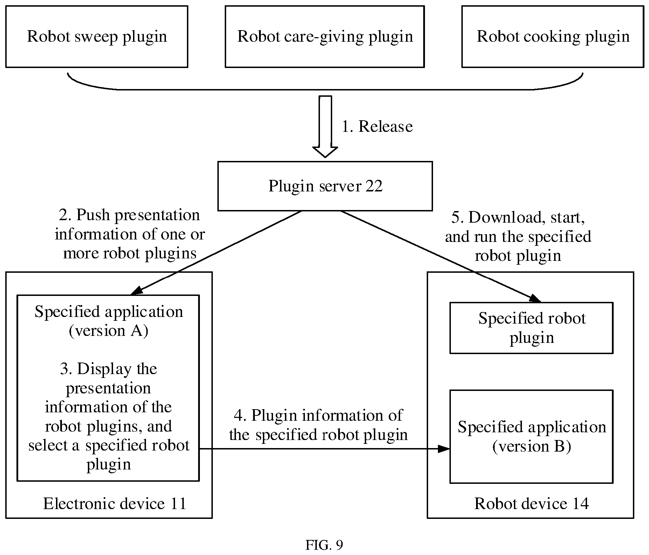

FIG. 9 is a diagram of a principle of a plugin control method according to an embodiment of this application; and

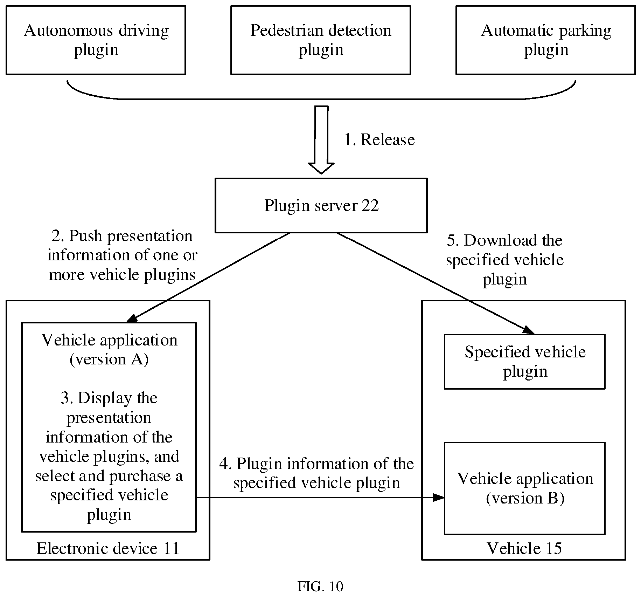

FIG. 10 is a diagram of a principle of a plugin control method according to an embodiment of this application.

### DESCRIPTION OF EMBODIMENTS

Technical solutions according to embodiments of this application are clearly and completely described in the following with reference to accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In the following, some terms of this application are described, to help a person skilled in the art have a better understanding.
1. An application is installed on an electronic device and has a function of providing a service for a user. For example, the application may be a camera application having a function of providing an image shooting service, a social application having a function of providing a chat service, a video application having a function of providing a video viewing service, or a music application having a function of providing a music playing service. The application may be developed by a manufacturer of the electronic device, or may be developed by a provider of an operating system on the electronic device, or may be developed by a third-party application manufacturer. This is not limited in this application.
2. A plugin (plugin) is a program programmed in compliance with a specified application interface. The plugin can be run only on an application specified by the application. The specified application can start and run the plugin through the interface. The plugin can be run on the specified application without installation, but cannot be run independently from the specified application. The plugin can provide an extended function that the specified application does not have for the specified application.

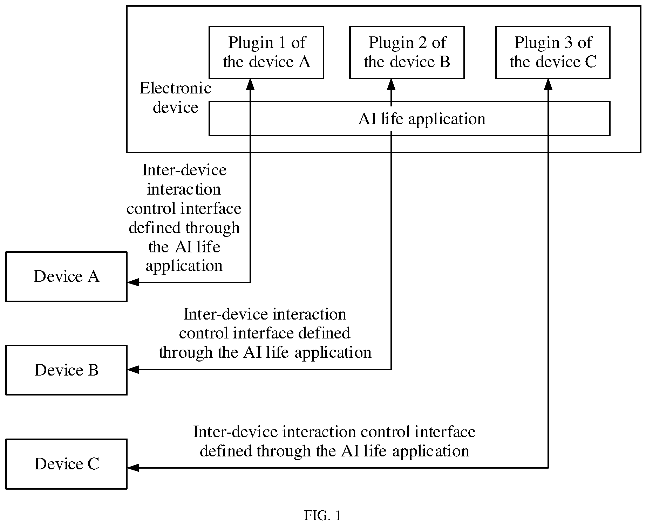

FIG. 1 is a diagram of a plugin use strategy according to an embodiment of this application.

As shown in FIG. 1, an application (for example, an AI life application) that supports running of a plugin may be installed on an electronic device. A mobile phone may further store plugins that can control a plurality of devices, for example, a plugin 1 that can control a device A, a plugin 2 that can control a device B, and a plugin 3 that can control a device C.

A developer needs to predefine an interaction control interface in each of the AI life application and another device, so that a plugin corresponding to the another device can invoke the interface to control the another device. For example, the plugin 1 may control the device A through an inter-device interaction control interface defined through the AI life application; the plugin 2 may control the device B through an inter-device interaction control interface defined through the AI life application; and the plugin 3 may control the device C through an inter-device interaction control interface defined through the AI life application.

However, in the plugin use strategy, when the another device (the device A, the device B, or the device C) has many functions, the developer cannot predefine inter-device interaction control interfaces for all functions of the another device through the AI life application. Consequently, interaction control functions of the electronic device and the another device cannot be extended, and no more use scenarios can be covered.

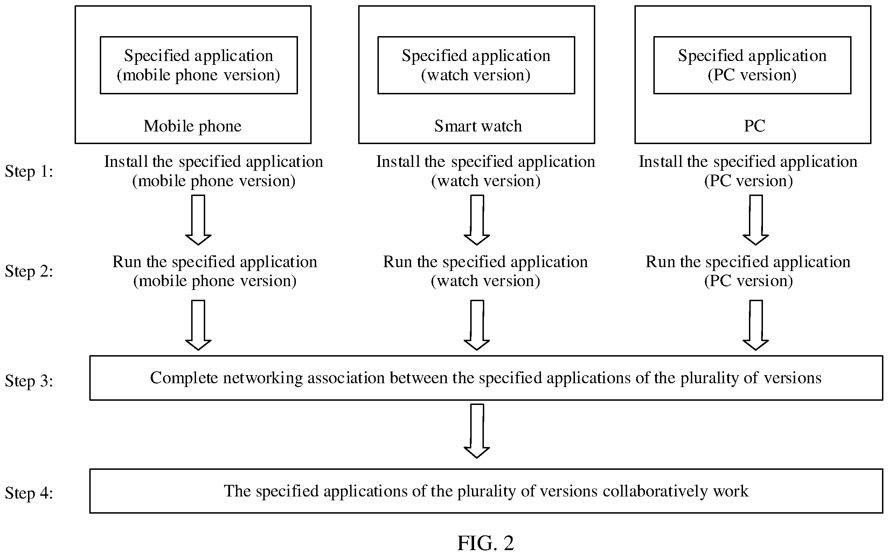

FIG. 2 is a schematic flowchart of cross-device interaction according to an embodiment of this application.

As shown in FIG. 2, an application manufacturer may develop applications that can be installed on different devices. For example, for a mobile phone, a specified application of a mobile phone version may be developed; for a smart watch, a specified application of a watch version may be developed; and for a personal computer (personal computer, PC), a specified application of a PC version may be developed. A plurality of devices may implement cross-device interaction by performing the following steps:
Step 1: The mobile phone may download and install the specified application of the mobile phone version, the smart watch may download and install the specified application of the watch version, and the PC may download and install the specified application of the PC version.
Step 2: The mobile phone may run the specified application of the mobile phone version, the smart watch may run the specified application of the watch version, and the PC may run the specified application of the PC version.
Step 3: Complete networking association between specified applications of the plurality of versions on the plurality of devices.
Step 4: The specified applications of the plurality of versions collaboratively work.

In the foregoing cross-device interaction procedure, when a user needs to perform cross-device collaboration on the plurality of devices, the user needs to install specified applications of corresponding versions on different devices, and the user needs to log in to each specified application by using an account. The user separately performs operations on the plurality of devices, resulting in complex operations.

Therefore, embodiments of this application provide a plugin control method, and a specified application may be installed on each of an electronic device and another device. The electronic device may receive an input of a user, and download specified plugins for implementing a same cross-device function to the electronic device and the another device through the specified applications respectively. The electronic device may run a downloaded specified plugin through a local specified application, and indicate the another device to also run a downloaded specified plugin through an installed specified application. The electronic device may implement the cross-device function through the local specified plugin and the specified plugin on the another device. In this way, the user may trigger, on the electronic device and for both the electronic device and the another device, downloading of the plugins for implementing the specified cross-device function, and the user can quickly implement the cross-device function with the another device.

For example, when a parent is away from home, and needs to play an interactive game with a child at home, the parent may open, on a mobile phone of the parent, a specified application (for example, an AI life application) that supports running of a plugin, and select a plugin combination of an interactive game from a plugin combination list of a cross-device function of the specified application. After the specified game is selected and a large-screen device at home is selected, a plugin of the interactive game may be downloaded on each of the phone and the large-screen device. A plugin on the mobile phone and a plugin on the large-screen device may be run through respective specified applications and perform networking connection, to play the interactive game. In this way, operations of the user can be reduced, and it is convenient for the user to interact with a family member in real time when the user is away from home.

For another example, when the user is away from home, and needs to view a real-time image at home, the user may open, on a mobile phone of the user, a specified application (for example, an AI life application) that supports running of a plugin, and select a plugin combination for a real-time home scene function from a plugin combination list of a cross-device function of the specified application. After a large-screen device at home is selected to collect a real-time image and/or sound, a plugin of the real-time home scene function may be downloaded on each of the mobile phone and the large-screen device. A plugin on the mobile phone and a plugin on the large-screen device may be run through respective specified applications and perform networking connection. The plugin on the large-screen device may send, to the plugin on the mobile phone, an image and/or a sound collected by the large-screen device. The plugin on the mobile phone may control the mobile phone to output the image and/or the sound collected by the large-screen device. In this way, operations of the user can be reduced, and it is convenient for the user to view a situation at home in real time when the user is away from home.

The following describes a system architecture of a plugin-based application provided in an embodiment of this application.

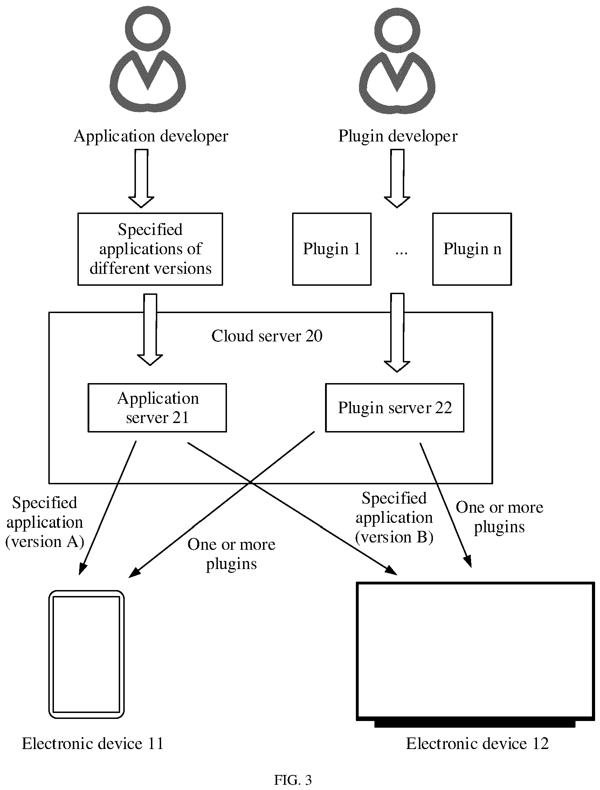

FIG. 3 is a diagram of a system architecture of a plugin-based application according to an embodiment of this application.

As shown in FIG. 3, the system architecture of the plugin-based application may include an application developer, a plugin developer, a cloud server 20, and a plurality of electronic devices. The cloud server 20 may include an application server 21 and a plugin server 22. The plurality of electronic devices may include an electronic device 11 and an electronic device 12.

The application developer may develop a plurality of specified applications of different versions. The specified application includes a basic module of the specified application. The basic module is configured to implement a basic function of the specified application, for example, photographing, video recording, an underlying communication invocation capability, plugin loading and running, or account authentication. Optionally, the specified application may further include a feature module bound to the basic module. The feature module may implement some extended functions of the specified application, for example, performing super-resolution processing on a recorded image based on the basic function of video recording, and performing beautification on a photographed portrait based on the basic function of photographing. Specified applications of different versions are adapted to different types of electronic devices, and the specified applications of different versions may have different interface display and/or feature modules. For example, the application developer may develop a specified application of a mobile phone version for a mobile phone, and develop a specified application of a watch version for a smart watch. The specified application of the mobile phone version may be different from the specified application of the watch version in terms of an interface display style and pattern. The specified application of the mobile phone version may have more feature modules than the specified application of the watch version, so that the specified application of the mobile phone version has more functions than the specified application of the watch version.

In some examples, some electronic devices of different types may alternatively be adapted to specified applications of a same version. For example, the mobile phone and a tablet may be adapted to the specified applications of the same version.

In this embodiment of this application, the application developer may be a manufacturer of the electronic device, a manufacturer of an operating system on the electronic device, or a developer of a third-party application. This is not limited in this application. In other words, the specified application may be a basic application (for example, AI life) developed by the manufacturer of the electronic device, or may be a basic application that is developed by the manufacturer of the operating system on the electronic device and that is embedded into a service package in the operating system (for example, a basic application in a harmony operating system connect service (harmony operating system connect service, HCS) package), or may be the third-party application (for example, a social application).

When developing the specified application, the application developer may set, in the specified application, a plugin software development kit (software development kit, SDK) of a group of standardized development interfaces, so that the plugin developer can implement development and compilation of the plugin based on the plugin development kit. The plugin can also access the specified application through the plugin SDK.

The plugin developer may develop, for the specified application developed by the application developer, one or more plugins that can be compatible with and run by the specified application, to extend a function of the specified application; or the plugin developer may develop a plugin of a new version based on a plugin of an existing version.

In an example, because different types of electronic devices are adapted to specified applications of different versions, the plugin developer may alternatively develop plugins of different versions for a same cross-device function based on the specified applications of different versions, to adapt to the different types of electronic devices. When the plugins of different versions are run on the specified applications of different versions, interface display patterns and styles provided in the plugins may be different, and/or the plugins of different versions may have different responsibilities in the same cross-device function. For example, to implement a cross-device function in a real-time home scene, the plugin developer may develop a real-time home scene plugin of a mobile phone version for the specified application of the mobile phone version, and develop a real-time home scene plugin of a watch version for the smart watch. After mutual authentication between the mobile phone and the watch succeeds, the real-time home scene plugin of the watch version may invoke the specified application of the watch version, to obtain a video stream shot by a camera, and send the video stream to the real-time home scene plugin of the mobile phone version; and the real-time home scene plugin of the mobile phone version may invoke the specified application of the mobile phone version to receive the video stream sent by the real-time home scene plugin of the watch version, and display the video stream.

After developing the specified application of one or more versions, the application developer may release the specified application of the one or more versions to the cloud server 20. After developing one or more plugins of a same cross-device function, the plugin developer may release the one or more plugins of the same cross-device function to the cloud server 20 in a combination form. Optionally, the plugin developer may further develop a plugin run on a single device, and release the plugin run on the single device to the cloud server 20.

In an example, the cloud server 20 may include the application server 21 and the plugin server 22. The specified application may be released to the application server 21, and the plugin or a plugin combination may be released to the plugin server 22.

The electronic device may download, from the cloud server 20, a specified application and/or a plugin that adapt/adapts to a device type of the electronic device. For example, the electronic device 11 may download a specified application of a version A from the application server 21. The electronic device 12 downloads a specified application of a version B from the application server 21. The electronic device 11 may download, from the plugin server 22, one or more plugins that can be loaded and run on the specified application of the version A. The electronic device 12 may download, from the plugin server 22, one or more plugins that can be loaded and run on the specified application of the version B.

In an example, after the application developer develops the specified application (for example, the AI life application or the basic application in the harmony operating system connect service package) of the one or more versions, before electronic device delivery, the manufacturer of the electronic device presets, on the electronic device based on the device type of the electronic device, the specified application of the one or more versions that is adapted to the device type.

It should be noted that the system architecture of the plugin-based application shown in FIG. 3 is merely an example, and constitutes no limitation on an application scenario of the plugin control method provided in embodiments of this application.

The following describes a principle of a plugin control method provided in embodiments of this application.

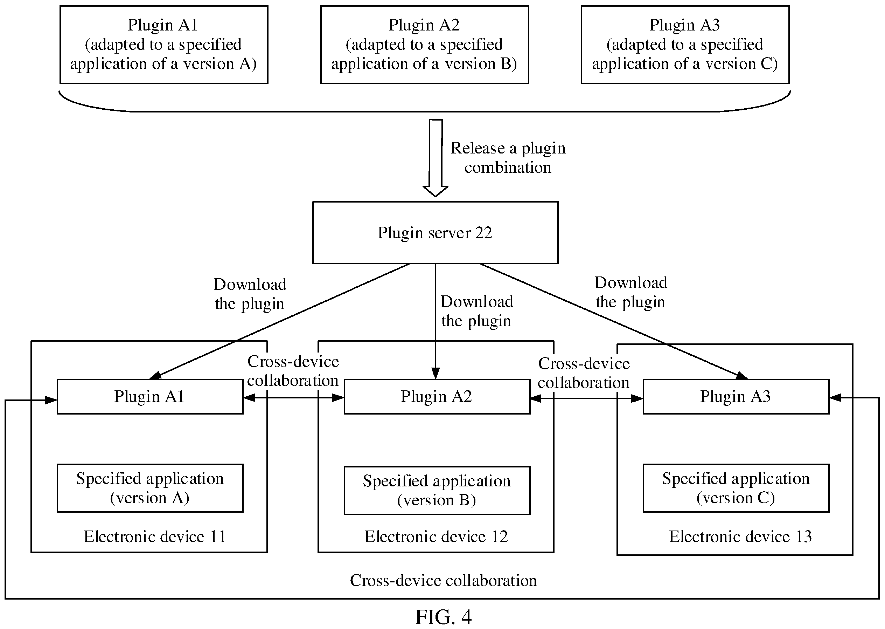

FIG. 4 is a diagram of a principle of a plugin control method according to an embodiment of this application.

As shown in FIG. 4, after developing a plugin of one or more versions for implementing a specified cross-device function, a plugin developer may release, in a form of plugin combination to the plugin server 22, the plugin of one or more versions for implementing the specified cross-device function. Plugins of different versions may be adapted to specified applications of different versions. The plugin combination may include a plugin A1, a plugin A2, and a plugin A3. The plugin A1 may be adapted to a specified application of a version A (for example, AI life of a mobile phone version), the plugin A2 may be adapted to a specified application of a version B (for example, AI life of a large-screen version), and the plugin A3 may be adapted to a specified application of a version C (for example, AI life of a watch version). The plugin A1, the plugin A2, and the plugin A3 may collaborate with each other to execute the specified cross-device function. When developing the plugin A1, the plugin A2, and the plugin A3, the plugin developer may perform differentiation design on the plugin A1, the plugin A2, and the plugin A3 in terms of user interaction (user experience, UX) interface display or function subdivision based on different types of electronic devices adapted to the plugins (which may also be understood as specified applications of different adapted versions). For example, in the plugins of different versions, display sizes of UX interfaces are different, or quantities of controls or display locations of controls on the UX interfaces are different. For another example, the plugin A1 may be a plugin of a mobile phone version developed for a cross-device function in a real-time home scene, the plugin A2 may be a plugin of a large-screen device version developed for the cross-device function in the real-time home scene, and the plugin A3 may be a plugin of a watch version developed for the cross-device function in the real-time home scene. After mutual authentication between a mobile phone, a watch, and a large-screen device succeeds, the plugin of the watch version may invoke a specified application of a watch version, to obtain a video stream shot by a camera, and send the video stream to the plugin of the mobile version. The plugin of the large-screen device version may also invoke a specified application of a large-screen device version, to obtain a video stream shot by a camera and send the video stream to the plugin of the mobile phone version. The plugin of the mobile phone version may invoke a specified application of the mobile phone version to receive the video stream sent by the watch and/or the video stream sent by the large-screen device, and display the video stream sent by the watch and/or the video stream sent by the large-screen device.

When releasing the plugin combination for the specified cross-device function to the plugin server 22, the plugin developer may further bind and release working configuration information of the plugin combination and the plugin combination to the plugin server 22. The working configuration information of the plugin combination describes one or more plugin working combinations that implement the specified cross-device function in the plugin combination. For example, the plugin combination may include the plugin A1 of the mobile phone version, the plugin A2 of the large-screen device version, and the plugin A3 of the watch version. The working configuration information of the plugin combination may indicate that the plugin A1 and the plugin A2 may support cross-device collaboration, the plugin A1 and the plugin A3 may implement cross-device collaboration, and the plugin A1, the plugin A2, and the plugin A3 may implement cross-device collaboration, but the plugin A2 and the plugin A3 cannot implement cross-device collaboration.

For example, the specified cross-device function is to implement the real-time home scene. Plugins in the plugin combination may determine, based on hardware capabilities of different devices, functions of all devices in the cross-device function in the real-time home scene. For example, a device having an information collection capability like a camera or a microphone may be used as an information input end to collect an environment information video stream; and a device having an output apparatus like a display whose size is greater than a preset size or a speaker may be used as an information output end to output environment information. The plugin developer can design a plugin combination for the cross-device function in the real-time home scene, including the plugin of the mobile phone version, the plugin of the large-screen device version, the plugin of the watch version, a plugin of a home camera version, and a plugin of a vehicle-mounted version. A user can trigger, on the electronic device, networking of the electronic device and another device through respective adapted plugins in the plugin combination. In this way, one or more devices collect environment information, and a specified device outputs the environment information collected by the one or more devices. The environment information may include an audio stream, an image stream, a video stream, and the like. The working configuration information of the plugin combination may describe the following working combinations:
(1) The plugin of the mobile phone version and the plugin of the large-screen device version are a working combination. The plugin of the large-screen device version collects a video stream, and the plugin of the mobile phone version outputs the video stream.
(2) The plugin of the mobile phone version and the plugin of the watch version are a working combination. The plugin of the watch version collects a video stream, and the plugin of the mobile phone version outputs the video stream.
(3) The plugin of the mobile phone version and the plugin of the home camera version are a working combination. The plugin of the home camera version collects a video stream, and the plugin of the mobile phone version outputs the video stream.
(4) The plugin of the mobile phone version and the plugin of the vehicle-mounted version are a working combination. The plugin of the vehicle-mounted version collects a video stream, and the plugin of the mobile phone version outputs the video stream.
(5) The plugin of the mobile phone version, the plugin of the watch version, and the plugin of the large-screen device version are a working combination. The plugin of the watch version collects a first video stream, the plugin of the large-screen device version collects a second video stream, and the plugin of the mobile phone version can selectively output the first video stream and/or the second video stream.
(6) The plugin of the mobile phone version, the plugin of the watch version, and the plugin of the home camera version are a working combination. The plugin of the watch version collects a first video stream, the plugin of the home camera version collects a second video stream, and the plugin of the mobile phone version can selectively output the first video stream and/or the second video stream.
(7) The plugin of the mobile phone version, the plugin of the large-screen device version, and the plugin of the home camera version are a working combination. The plugin of the large-screen device version collects a first video stream, the plugin of the home camera version collects a second video stream, and the plugin of the mobile phone version can selectively output the first video stream and/or the second video stream.
(8) The plugin of the mobile phone version, the plugin of the large-screen device version, and the plugin of the vehicle-mounted version are a working combination. The plugin of the large-screen device version collects a first video stream, the plugin of the vehicle-mounted version collects a second video stream, and the plugin of the mobile phone version can selectively output the first video stream and/or the second video stream.
(9) The plugin of the mobile phone version, the plugin of the watch version, and the plugin of the vehicle-mounted version are a working combination. The plugin of the watch version collects a first video stream, the plugin of the vehicle-mounted version collects a second video stream, and the plugin of the mobile phone version can selectively output the first video stream and/or the second video stream.
(10) The plugin of the mobile phone version, the plugin of the home camera version, and the plugin of the vehicle-mounted version are a working combination. The plugin of the home camera version collects a first video stream, the plugin of the vehicle-mounted version collects a second video stream, and the plugin of the mobile phone version can selectively output the first video stream and/or the second video stream.
(11) The plugin of the mobile phone version, the plugin of the home camera version, the plugin of the vehicle-mounted version, and the plugin of the large-screen device version are a working combination. The plugin of the home camera version collects a first video stream, the plugin of the home camera version collects a second video stream, the plugin of the vehicle-mounted version collects a third video stream, the plugin of the large-screen device version collects the third video stream, and the plugin of the mobile phone version can selectively output the first video stream and/or the second video stream and/or the third video stream.
(12) The plugin of the mobile phone version, the plugin of the home camera version, the plugin of the vehicle-mounted version, the plugin of the watch version, and the plugin of the large-screen device version are a working combination. The plugin of the home camera version collects a first video stream, the plugin of the vehicle-mounted version collects a second video stream, the plugin of the watch version collects a third video stream, the plugin of the large-screen device version collects a fourth video stream, and the plugin of the mobile phone version can selectively output the first video stream and/or the second video stream and/or the third video stream and/or the fourth video stream.
(13) The plugin of the large-screen device version, the plugin of the vehicle-mounted version, and the plugin of the watch version are a working combination. The plugin of the vehicle-mounted version collects a first video stream, the plugin of the watch version collects a second video stream, and the plugin of the large-screen device version can selectively output the first video stream and/or the second video stream.

The working configuration information of the plugin combination is merely used to explain embodiments of this application, and should not be construed as a limitation. In a specific implementation, the working configuration information of the plugin combination may include more or fewer working combinations.

In this embodiment of this application, that the plugin is adapted to the electronic device and the plugin is adapted to the specified application on the electronic device may mean that the specified application on the electronic device may run the plugin. For example, that the plugin A1 is adapted to the mobile phone may mean that the specified application of the version A on the mobile phone may support running of the plugin A1, that the plugin A2 is adapted to the large-screen device may mean that the specified application of the version B on the large-screen device may support running of the plugin A2, and that the plugin A3 is adapted to the watch may mean that the specified application of the version C on the large-screen device may support running of the plugin A3. However, the specified application of the version A on the mobile phone does not support running of the plugin A2 and the plugin A3, the specified application of the version B on the large-screen device does not support running of the plugin A1 and the plugin A3, and the specified application of the version C on the watch does not support running of the plugin A1 and the plugin A2.

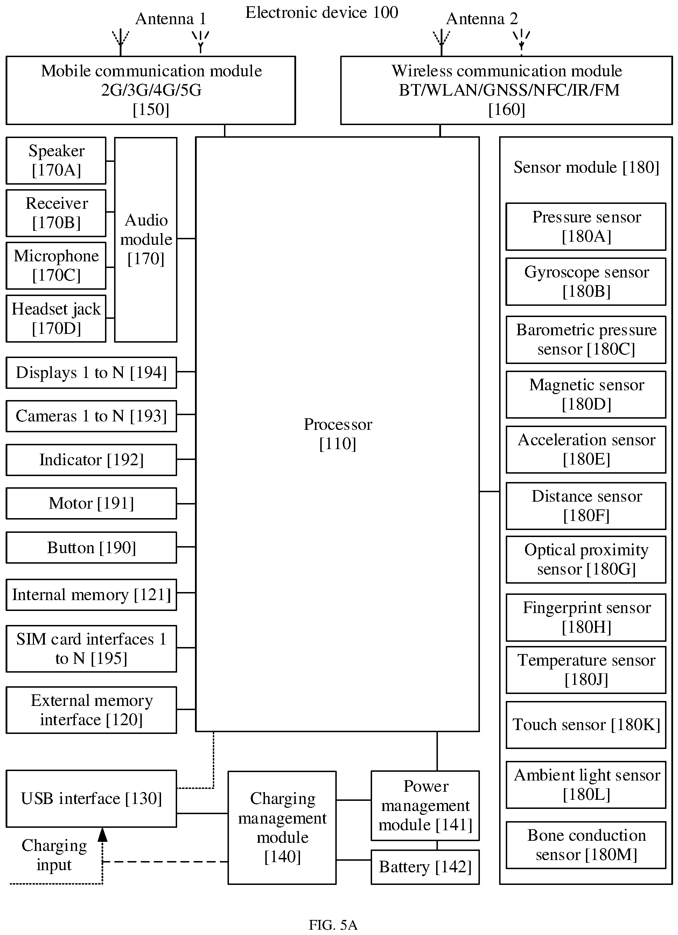

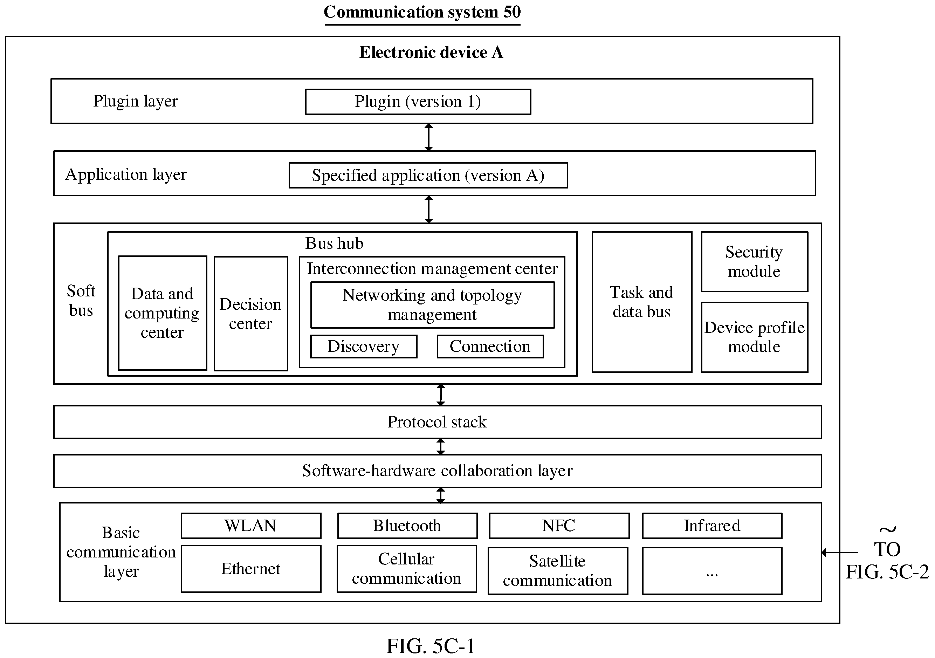

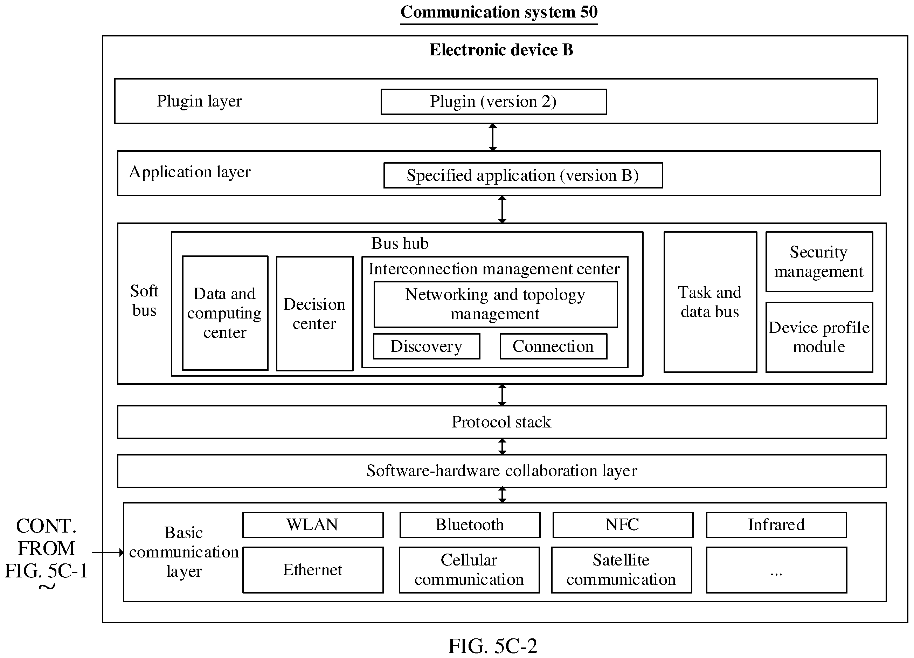

FIG. 5A is a diagram of a structure of an electronic device 100.

The electronic device 100 is used as an example below to describe embodiments in detail. It should be understood that the electronic device 100 shown in FIG. 5A is merely an example, and the electronic device 100 may have more or fewer components than those shown in FIG. 5A, or a combination of two or more components, or different component configurations. Various components shown in FIG. 5A may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of the present invention does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may also be disposed in the processor 110, and is configured to store instructions and data. In some embodiments, the memory in the processor 110 is a cache. The memory may store the instructions or the data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and connects the display 194 and the application processor. The GPU is configured to: perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or a speech message is received through the electronic device 100, the receiver 170B may be put close to a human ear to listen to a speech.

The microphone 170C, also referred to as a "mike" or a "mic", is configured to convert a sound signal into an electrical signal. When making a call or sending a speech message, the user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force acts on the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction for creating a new SMS message is performed.

The gyroscope sensor 180B may be configured to determine a motion posture of the electronic device 100. In some embodiments, an angular velocity of the electronic device 100 around three axes (axes x, y, and z) may be determined through the gyroscope sensor 180B. The gyroscope sensor 180B may be configured to implement image shooting stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover through the magnetic sensor 180D. In some embodiments, when the electronic device 100 is a clamshell phone, the electronic device 100 may detect opening and closing of a flip cover through the magnetic sensor 180D. Further, a feature like automatic unlocking of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in switching between a landscape mode and a portrait mode, a pedometer, or another application.

The distance sensor 180F is configured to measure a distance. The electronic device 100 may measure the distance in an infrared manner or a laser manner. In some embodiments, in an image shooting scene, the electronic device 100 may measure a distance by using the distance sensor 180F, to implement quick focusing.

The optical proximity sensor 180G may include, for example, a light-emitting diode (LED) and an optical detector, for example, a photodiode. The light emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during image shooting. The ambient light sensor 180L may also cooperate with the optical proximity sensor 180G, to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based image shooting, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may alternatively be disposed in the headset, to combine into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may further be compatible with different types of SIM cards. The SIM card interface 195 may further be compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

In embodiments of this application, a device type of the electronic device 100 is not limited. For example, the electronic device may be a mobile phone (mobile phone), a personal computer (personal computer, PC), a tablet computer, a notebook computer, a palmtop computer, a large-screen device (also referred to as a smart television), a smart camera, a smart refrigerator, an in-vehicle device (for example, an in-vehicle entertainment screen), a smart watch, a smart speaker, a smart refrigerator, a smart air conditioner, a smart camera, a smart robot, a mobile internet device (mobile internet device, MID), a smart point of sale (point of sale, POS), a wearable device, a virtual reality (virtual reality, VR) device, an augmented reality (augmented reality, AR) device, a wireless terminal in industrial control (industry control), or a wireless terminal in self driving (self driving).

In embodiments of this application, for hardware structures of the electronic device 11, the electronic device 12, and the electronic device 13, refer to a hardware structure of the electronic device 100 shown in FIG. 5A.

A software system of the electronic device 100 may use a layered architecture, an event-driven architecture, a microkernel architecture, a micro service architecture, or a cloud architecture. In this embodiment of this application, an example in which the software system of the electronic device 100 is a system of a layered architecture is used to describe the software structure of the electronic device 100. The system of the layered architecture includes but is not limited to an Android (Android) system, a Harmony (Harmony) system, and the like.

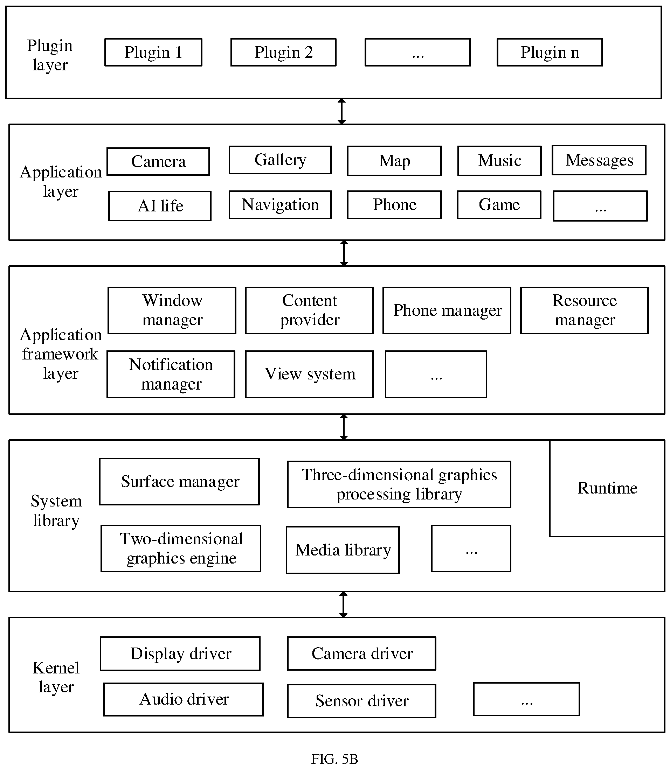

FIG. 5B is a block diagram of a software structure of an electronic device 100 according to an embodiment of the present invention.

In a layered architecture, software is divided into several layers, and each layer has a clear role and task. The layers communicate with each other through a software interface. In some embodiments, an operating system is divided into five layers: a plugin layer, an application layer, an application framework layer, a runtime (runtime) and system library, and a kernel layer from top to bottom.

The plugin layer may include n plugins (plugin), where n is a positive integer. The plugin is a program programmed in compliance with a specific application interface. The plugin can be run only on an application specified by the application, and cannot be run independently from the specified application. The plugin can provide an extended function that the application does not have for the specified application. The plugin can be run on the specified application without installation. A programming language of the plugin includes but is not limited to Java, JavaScript, and the like. In some embodiments, when programming languages of plugins are different, the plugins may have different names. For example, when the programming language of the plugin is JavaScript, the plugin may also be referred to as an applet.

In an example, when the programming language of the plugin is Java, to run the plugin through the specified application on the electronic device 100 without installation, code in the plugin needs to be loaded and executed through class loader injection (class loader injection), a component in the plugin needs to be invoked by the operating system of the electronic device 100 by using a runtime container (runtime container), and a resource in the plugin needs to be identified through resource injection (resource injection).

In an example, when the programming language of the plugin is JavaScript, the specified application may be used as a basic platform to provide an application development interface (for example, a JavaScript interface layer), a plugin manufacturer is supported in building and developing a plugin (also referred to as an applet) on the specified application by using JavaScript, and the plugin is run on the specified application through the JavaScript interface layer.

In an example, the plugin may access an application through an interface (for example, a plugin SDK). The applications can access the plugin through interface reflection invocation.

The application layer may include a series of applications.

As shown in FIG. 5B, the applications may include Camera, Gallery, Map, Music, Messages, AI life, Navigation, Phone, Game, and the like. An application may access, through an interface, a plugin that can be run on the application at the plugin layer.

The application framework layer provides an application programming interface (application programming interface, API) and a programming framework for an application at the application layer. The application framework layer includes some predefined functions.

As shown in FIG. 5B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to: store and obtain data, and enable the data to be accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message, which may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is played, the electronic device vibrates, or the indicator light blinks.

The runtime includes a kernel library and a virtual machine. The runtime is responsible for scheduling and management of an Android system. In this embodiment of this application, when an application is installed on the electronic device 100, or a plugin is loaded on the application through an interface, the runtime may provide a running environment and a compilation environment.

The kernel library includes two parts: a function that needs to be invoked in a Java language and a kernel library of the operating system.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In embodiments of this application, for software system structures of the electronic device 11, the electronic device 12, and the electronic device 13, refer to a software system structure of the electronic device 100 shown in FIG. 5B.

FIG. 5C-1 and FIG. 5C-2 are a diagram of an architecture of a communication system 50 according to an embodiment of this application.

As shown in FIG. 5C-1 and FIG. 5C-2, the communication system 50 may include an electronic device A and an electronic device B. The electronic device A and the electronic device B each include a plugin layer, an application layer, a soft bus, a protocol stack, a software-hardware collaboration layer, and a basic communication layer.

The plugin layer may include one or more plugins. The plugin can be run on a specified application at the application layer through an interface. A plugin on the electronic device A may be a plugin of a version 1. A plugin of the electronic device B may be a plugin of a version 2. The plugin of the version 1 and the plugin of the version 2 can implement a cross-device function together.

The application layer may include one or more applications. The one or more applications may include the specified application. The specified application on the electronic device A may be a specified application of a version A. The specified application on the electronic device B may be a specified application of a version B.

When the plugin of the version 1 is loaded and run on the specified application of the version A, and the plugin of the version 2 is loaded and run on the specified application of the version B, both the plugin of the version 1 and the plugin of the version 2 may invoke a communication capability provided by the respective soft buses, to transmit data to each other.

The soft bus can include a bus hub, a task and data bus, a security module, and a device profile (device profile) module.

The bus hub may be responsible for parsing commands, to implement discovery and connection between devices, and implement functions such as file transfer and message transfer between devices through the task bus and the data bus. The bus hub may include a data and computing center, a decision center, and an interconnection management center. The data and computing center may be configured to be responsible for data processing and computing. The decision center may be configured to determine solutions such as discovery, connection, and data transmission mode between devices. The interconnection management center is configured to implement functions such as networking and topology management (for example, forming a star network topology or a mesh network topology) between devices, and device discovery and connection.

In this embodiment of this application, the bus hub may discover one or more devices near the electronic device by using a near field communication technology (for example, Wi-Fi, Bluetooth, NFC, UWB, or infrared). In an example, the bus hub may alternatively discover the one or more devices in a local area network in which the electronic device is located. In an example, if the electronic device and the one or more devices are connected to a server, the bus hub may discover, through the server, the one or more devices that have been online. The one or more devices and the electronic device may log in to a same account, or a login account of the one or more devices is bound to a login account of the electronic device.

The task and data bus may include the task bus and the data bus. The task bus may be configured to provide a path for transmitting information (for example, control signaling and a notification message between devices) of a small amount of data, and the data bus may be configured to provide a path for transmitting information (for example, file data such as an audio and a video) of a large amount of data.

The security module may be configured to implement functions such as authentication and access authentication between devices.

The device profile (device profile) module may be configured to be responsible for managing and recording device information of discovered or connected devices. The device information may include a hardware capability and a system software feature of the device. For example, the device information may include one or more of the following: a device type, a device name, a storage capacity, whether a device is foldable, whether the device has a screen, whether the device has a camera, a screen resolution, a device security level, a type of an operating system of the device, a version number of the operating system, and a version type of a specified application (for example, an AI life application).

The bus hub may combine the one or more devices discovered by the bus hub and the electronic device to form a to-be-networked device. The bus hub may transfer device information of the to-be-networked device to the specified application through an interface (for example, an HCS service package).

The protocol stack and the software-hardware collaboration layer may invoke one or more basic communication technologies at the basic communication layer, to implement communication between devices (for example, between the electronic device A and the electronic device B).

The basic communication layer may provide one or more of the following communication technologies: WLAN, Bluetooth, NFC, infrared, Ethernet, cellular communication (including 2G/3G/4G/5G, and the like), satellite communication, and the like.

The following describes a diagram of a hardware structure of a cloud server 200 provided in an embodiment of this application.

As shown in FIG. 6, the cloud server 200 includes one or more processors 201, a communication interface 202, and a memory 203. The processor 201, the communication interface 202, and the memory 203 may be connected through a bus 204 or in another manner. In this embodiment of this application, connection implemented through the bus 204 is used as an example.

The processors 201 may include one or more general-purpose processors, for example, CPUs. The processors 201 may be configured to run related program code of a device control method.

The communication interface 202 may be a wired interface (for example, an Ethernet interface) or a wireless interface (for example, a cellular network interface or a wireless local area network interface), and is configured to communicate with another node. In this embodiment of this application, the communication interface 202 may be specifically configured to communicate with one or more electronic devices.

The memory 203 may include a volatile memory (volatile memory), for example, a RAM; or the memory may alternatively include a non-volatile memory (non-volatile memory), for example, a ROM, a flash memory (flash memory), an HDD, or a solid-state drive (SSD); or the memory 203 may include a combination of the foregoing types of memories. The memory 203 may be configured to store a group of program code, so that the processor 201 invokes the program code stored in the memory 203 to implement a method implemented by the server in embodiments of this application. In this embodiment of this application, the memory 203 may alternatively be a storage array, or the like.

In some embodiments, the cloud server 200 may include a plurality of servers, for example, an application server 21 and a plugin server 22. For hardware structures of the plurality of servers, refer to the hardware structure of the cloud server 200 shown in FIG. 6.

It should be noted that the cloud server 200 shown in FIG. 6 is merely an implementation in embodiments of this application. During actual application, the cloud server 200 may alternatively include more or fewer components. This is not limited herein.

The following describes, with reference to an application scenario, a plugin control method provided in embodiments of this application.

FIG. 7A to FIG. 7J are example diagrams of interfaces of a plugin control method in a "real-time home scene" scenario.

As shown in FIG. 7A, the electronic device 11 may display a home screen 710. A page on which an application icon is placed is displayed on the home screen 710. The page includes a plurality of application icons (for example, a Weather application icon, a Stock application icon, a Calculator application icon, a Settings application icon, an Email application icon, a Gallery application icon, a Music application icon, a Video application icon, a Browser application icon, and an AI life application icon 712). A page indicator is further displayed below the plurality of application icons, to indicate a location relationship between a currently displayed page and another page. There are a plurality of tray icons (for example, a Dialer application icon, a Messages application icon, a Contacts application icon, and a Camera application icon) below the page indicator, and the tray icons remain displayed during page switching. In some embodiments, the page may alternatively include a plurality of application icons and a page indicator. The page indicator may not be a part of the page but exist independently, and the image icons are also optional. This is not limited in embodiments of this application. A status bar 711 is displayed in an area of an upper part of the home screen 710. The status bar 711 may include one or more signal strength indicators of a mobile communication signal (which may also be referred to as a cellular signal), a battery status indicator, a time indicator, a Wi-Fi signal indicator, and the like.

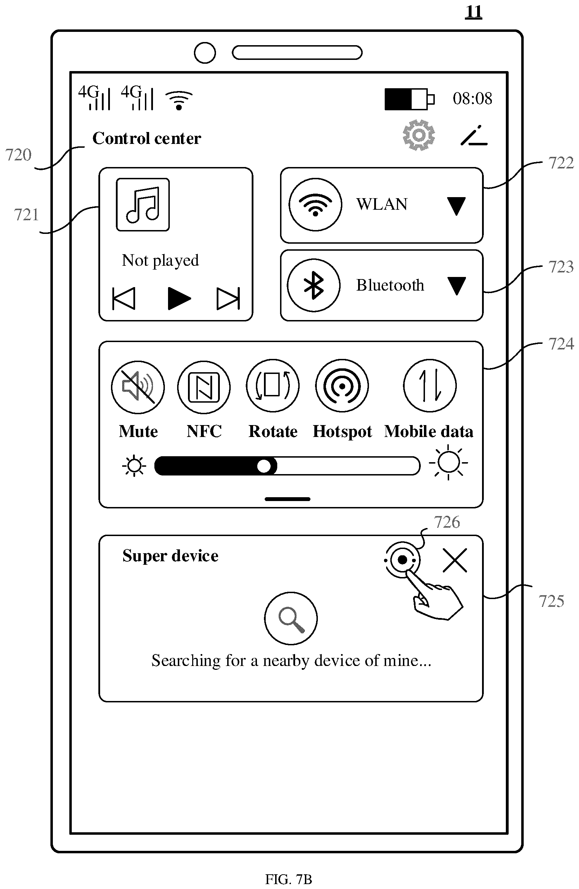

The electronic device 11 may receive an operation (for example, sliding down) performed by a user on the status bar 711, and in response to the operation, the electronic device 11 may display a control center interface 720 shown in FIG. 7B.

As shown in FIG. 7B, the control center interface 720 may include one or more function controls (for example, a wireless local area network (WLAN) on/off control, a Bluetooth on/off control, a Mute on/off control, an MFC on/off control, an auto-rotation on/off control, a Hotspot on/off control, a Mobile data on/off control, and a brightness adjustment control), a music control widget, and a Super device control widget 725. The Super device control widget 725 may include a start control 726.

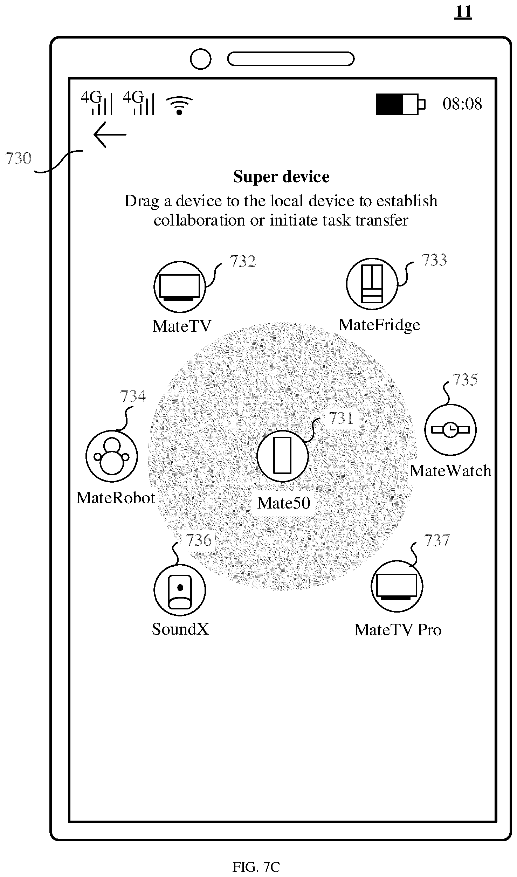

The electronic device 11 may receive an operation (for example, a tap) performed by the user on the start control 726, and in response to the operation, the electronic device 11 may display a Super device interface 730 shown in FIG. 7C.

As shown in FIG. 7C, the Super device interface 730 may include a device icon 731 of the electronic device 11 and a device icon of one or more devices discovered by the electronic device 11. For example, the one or more devices discovered by the electronic device 11 may include a large-screen device "MateTV", a smart refrigerator "MateFridge", a smart robot "MateRobot", a smart watch "MateWatch", a smart speaker "SoundX", and a large-screen device "MateTV Pro". A device icon 732 corresponding to the large-screen device "MateTV", a device icon 733 corresponding to the smart refrigerator "MateFridge", a device icon 734 corresponding to the smart robot "MateRobot", a device icon 735 corresponding to the smart watch "MateWatch", a device icon 736 corresponding to the smart speaker "SoundX", and a device icon 737 corresponding to the large-screen device "MateTV Pro" may be displayed on the Super device interface 730. The user may drag, on the Super device interface 730, a device icon (for example, the device icon 732) of a specified device to a location near the device icon 731 of the electronic device 11, to trigger the electronic device 11 to implement a collaboration function (for example, projection, audio playing, or call transfer) with the specified device.

In this embodiment of this application, the electronic device 11 may discover the one or more devices near the electronic device 11 by using a near field communication technology (for example, Wi-Fi, Bluetooth, NFC, UWB, or infrared). In an example, the electronic device 11 may alternatively discover the one or more devices in a local area network in which the electronic device 11 is located. In an example, if the electronic device 11 and the one or more devices are connected to a server, the electronic device 11 may discover, through the server, the one or more devices that have been online. The one or more devices and the electronic device 11 may log in to a same account, or a login account of the one or more devices is bound to a login account of the electronic device 11.

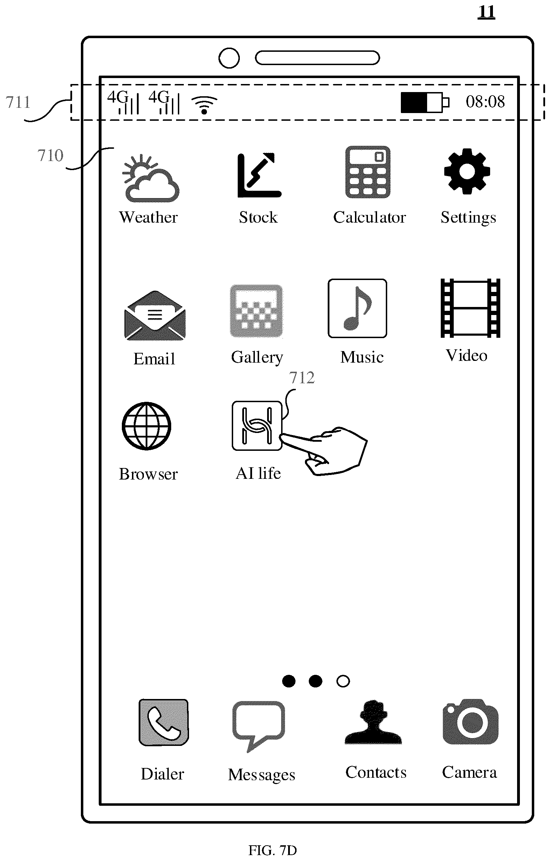

As shown in FIG. 7D, after the electronic device 11 discovers the one or more devices, the electronic device 11 may display the home screen 710. For text descriptions of the home screen 710, refer to the embodiment shown in FIG. 7A. Details are not described herein again.

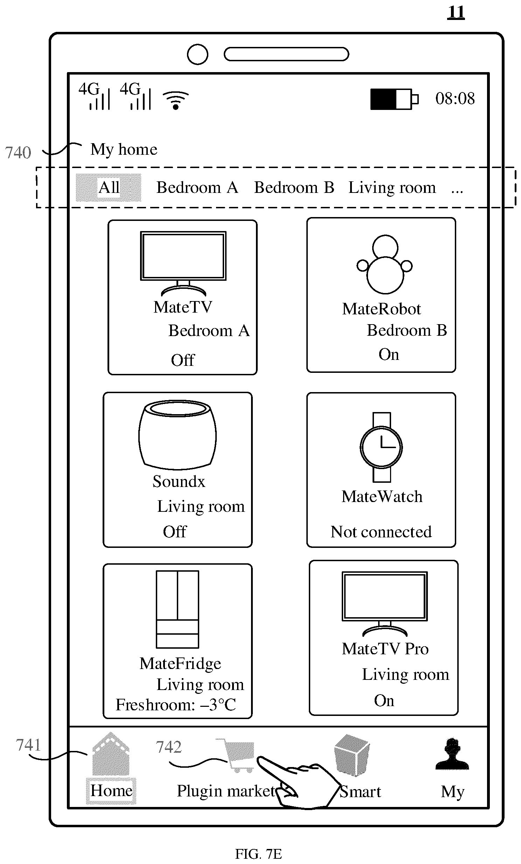

The electronic device 11 may receive an operation (for example, a tap) performed by the user on the AI life application icon 712, and in response to the operation, the electronic device 11 may display a smart application interface 740 shown in FIG. 7E.

As shown in FIG. 7E, a plurality of page options may be displayed on the smart application interface 740. The plurality of page options may include a Home option 741, a Plugin market option, a Smart option, and a My option. A page option may be used to trigger the electronic device 11 to display, on the smart application interface 740, a page corresponding to the page option. When the Home option is selected, a page corresponding to the Home option 741 may include a device management widget of the one or more devices discovered by the electronic device 11. For example, the device management widget of the one or more devices may include a device management widget of the large-screen device "MateTV", a device management widget of the smart robot "MateRobot", a device management widget of the smart speaker "SoundX", a device management widget of the smart watch "MateWatch", a device management widget of the smart refrigerator "MateFridge", or a device management widget of the large-screen device "MateTV Pro".

The electronic device 11 may receive an operation (for example, a tap) performed by the user on the Plugin market option 742, and in response to the operation, the electronic device 11 may send device information of a networked device to the plugin server 22 through the AI life application. The networked device may include the electronic device 11 and the one or more devices discovered by the electronic device 11. The device information of the networked device may include a device name, a device type, and the like of the networked device. After receiving the device information of the networked device, the plugin server 22 may select, from a plugin combination for one or more cross-device functions based on working configuration information of the plugin combination for one or more cross-device functions and the device information of the networked device, a plugin combination for one or more specified cross-device functions that can be run on the networked device. The plugin server 22 may send plugin information of the one or more specified cross-device functions to the AI life application on the electronic device 11. The electronic device 11 may display the plugin information of the one or more specified cross-device functions on the interface of the AI life application.

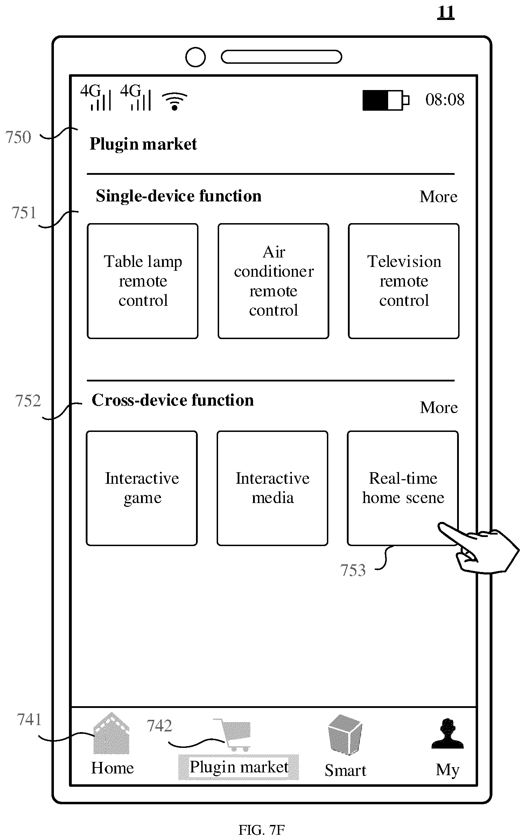

For example, the one or more specified cross-device functions may include an interactive game function, an interactive media function, and a real-time home scene function. After receiving the plugin information of the one or more specified cross-device functions sent by the plugin server 22, the electronic device 11 may display a Plugin market interface 750 shown in FIG. 7F.

As shown in FIG. 7F, a page corresponding to the Plugin market option 742 may be displayed on the Plugin market interface 750, where the page corresponding to the Plugin market option 742 may include a Single-device function area 751 and a cross-device collaboration function area 752. The Single-device function area 751 may include a plugin option of one or more single-device functions. For example, the one or more single-device functions may include a Table lamp remote control function, an Air conditioner remote control function, and a Television remote control function. The electronic device 11 may receive an input of downloading the plugin of the single-device function by the user. In response to the input, the electronic device 11 may run the plugin of the single-device function through the AI life application, and control another device through an inter-device interaction control interface predefined through the AI life application. For a specific function of the single-device plugin, refer to the embodiment shown in FIG. 1. Details are not described herein again.

The cross-device collaboration function area 752 may include a plugin option of one or more specified cross-device functions. For example, the plugin option of the one or more specified cross-device functions may include a plugin option for the interactive game function, a plugin option for the interactive media function, or a plugin option 753 for the real-time home scene function. The electronic device 11 may receive an input of selecting, by the user, a plurality of devices in the networked device to download a plugin of a first cross-device function, and the electronic device 11 may trigger the plurality of devices selected by the user to download respectively adapted plugins of the first cross-device function, and negotiate with the plurality of devices specified by the user to complete the first cross-device function.

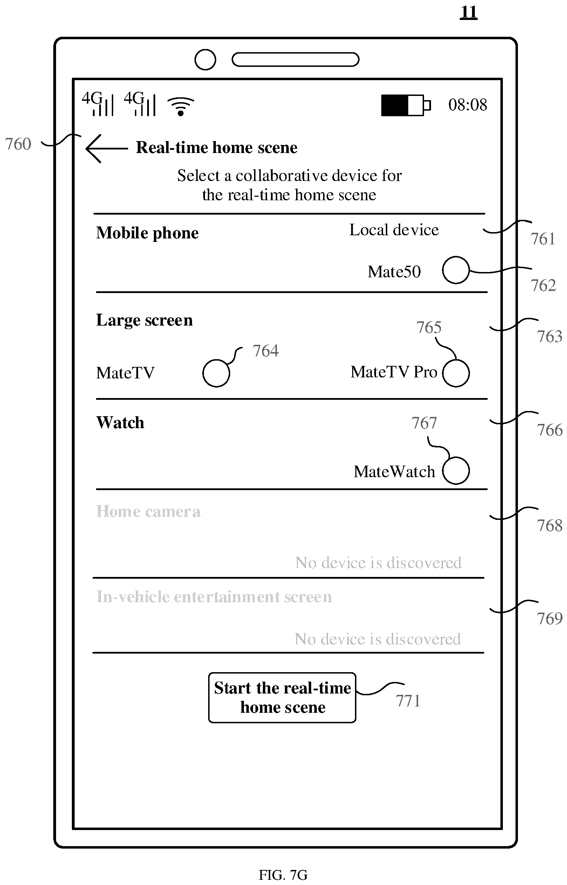

The electronic device 11 may receive an operation (for example, a tap) performed by the user on the plugin option 753, and in response to the operation, the electronic device 11 may display a Real-time home scene function interface 760 shown in FIG. 7G.

As shown in FIG. 7G, the Real-time home scene function interface 760 may include option areas of a plurality of device types of devices that support the real-time home scene function, for example, an option area 761 of a mobile phone, an option area 763 of a large-screen device, an option area 766 of a watch, an option area 768 of a home camera, and an option area 769 of an in-vehicle infotainment screen. For example, a device type of the electronic device 11 may be a mobile phone, the option area 761 may be an option area corresponding to the electronic device 11, and prompt information (for example, a text prompt "local device") may be displayed in the option area 761, where the prompt information may indicate that the option area 761 corresponds to the electronic device 11. A selection control 762 of the electronic device 11 may be displayed in the option area 761. The Real-time home scene function interface 760 may further include a real-time home scene start control 771.

The plurality of devices discovered by the electronic device 11 include the large-screen device "MateTV", the smart refrigerator "MateFridge", the smart robot "MateRobot", the smart watch "MateWatch", the smart speaker "SoundX", and the large-screen device "MateTV Pro". In the plurality of devices discovered by the electronic device 11, the large-screen device "MateTV", the smart watch "MateWatch", and the large-screen device "MateTV Pro" support the real-time home scene function. Therefore, a selection control 764 corresponding to the large-screen device "MateTV" and a selection control 765 corresponding to the large-screen device "MateTV Pro" may be displayed in the option area 763 of the large-screen device. A selection control 767 corresponding to the smart watch "MateWatch" may be displayed in the option area 766 of the watch.

Because the home camera and the in-vehicle infotainment screen are not in the plurality of devices discovered by the electronic device 11, the electronic device 11 may display no selection control in the option area 768 of the home camera and the option area 769 of the in-vehicle infotainment screen.

Optionally, prompt information may be further displayed in the option area 768 of the home camera and the option area 769 of the in-vehicle infotainment screen, where the prompt information may notify the user that the electronic device 11 does not find the home camera and the in-vehicle infotainment screen that can be used for the real-time home scene function. For example, the prompt information may be a text prompt "No device is discovered".

Optionally, a background color and/or a text color in the option area 768 of the home camera and the option area 769 of the in-vehicle infotainment screen may be set to be different from those in the option area 761, the option area 763, and the option area 766. This helps notify the user that the electronic device 11 does not find a device that can be used for the specified cross-device function.

Optionally, a purchase link of the home camera may also be displayed in the option area 768 of the home camera, and a shopping link of a vehicle including the in-vehicle infotainment screen may also be displayed in the option area 769 of the in-vehicle infotainment screen. This helps the user quickly learn shopping information (for example, price and device details) of a device that can be used for the specified cross-device function.

Optionally, the electronic device 11 may further display a device type combination prompt on the Real-time home scene function interface 760. The device type combination prompt may be used to prompt the user with one or more device type combinations (for example, a combination 1: "the mobile phone+the large-screen device+the watch", a combination 2: "the mobile phone+the large-screen device", and a combination 3: "the mobile phone+the watch") that are in the networked device and that support the real-time home scene function.

In an example, alternatively, only an option area corresponding to a device that is in the networked device and that supports the real-time home scene function may be displayed on the Real-time home scene function interface 760. For example, device types that support the real-time home scene function include the mobile phone, the large-screen device, the watch, the home camera, and the in-vehicle entertainment screen. The networked device includes a mobile phone "Mate 50" (namely, the electronic device 11), the large-screen device "MateTV", the smart refrigerator "MateFridge", the smart robot "MateRobot", the smart watch "MateWatch", the smart speaker "SoundX", and the large-screen device "MateTV Pro". Therefore, the electronic device 11 may display only the option area 761 of the mobile phone, the option area 763 of the large-screen device, and the option area 766 of the watch on the Real-time home scene function interface 760.

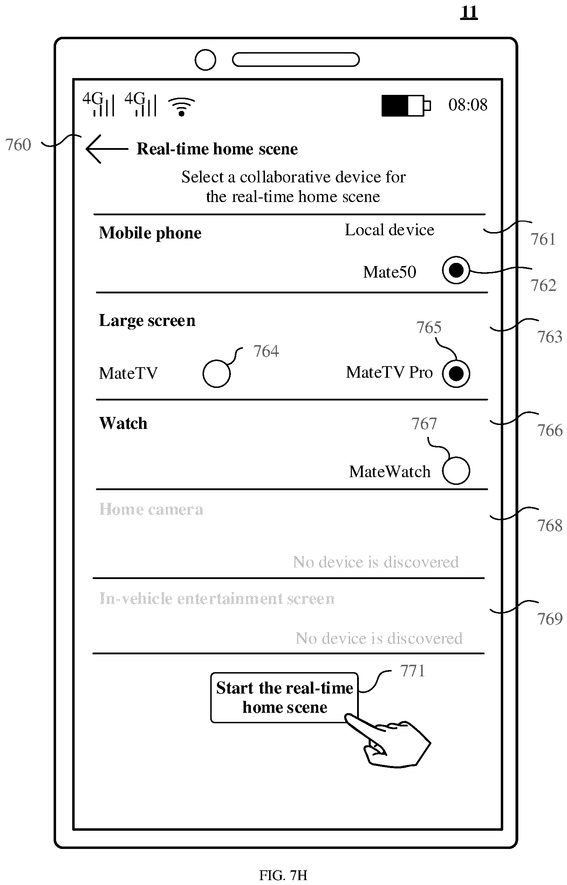

As shown in FIG. 7H, the electronic device 11 may receive a selection operation (for example, a tap) performed by the user on the selection control 762 and the selection control 765. In response to the selection operation, the electronic device 11 may switch the selection control 762 and the selection control 765 from an unselected state to a selected state. In other words, the mobile phone "Mate50" (namely, the electronic device 11) and the large-screen device "MateTV Pro" are selected by the user to complete the real-time home scene function. After the selection control 762 and the selection control 765 are switched from the unselected state to the selected state, the electronic device 11 may receive an operation (for example, a tap) performed by the user on the real-time home scene start control 771. In response to the operation, the electronic device 11 may trigger the electronic device 11 to download and run a plugin of a mobile phone version for the real-time home scene function, and trigger the large-screen device "MateTV Pro" to download and run a plugin of a large-screen device version for the real-time home scene function. The large-screen device "MateTV Pro" controls, through the plugin of the large-screen device version, a camera and a microphone of the large-screen device "MateTV Pro" to collect a video stream in real time, and sends the video stream collected in real time to the electronic device 11. The electronic device 11 may collect, through the plugin of the mobile phone version, the video stream sent by the large-screen device "MateTV Pro", and display the video stream on a display of the electronic device 11.

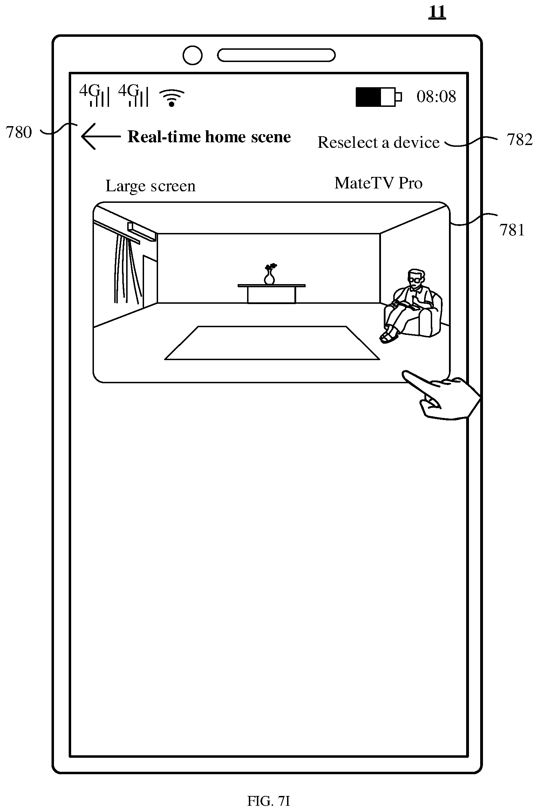

For example, as shown in FIG. 7I, after receiving the video stream sent by the large-screen device "MateTV Pro", the electronic device 11 may display a Real-time home scene function interface 780. The Real-time home scene function interface 780 may include a video image option 781 and a device reselection control 782. An image of the video stream sent by the large-screen device "MateTV Pro" may be displayed on the video image option 781. The device reselection control 782 may trigger the electronic device 11 to reselect a plurality of devices for executing the real-time home scene function.

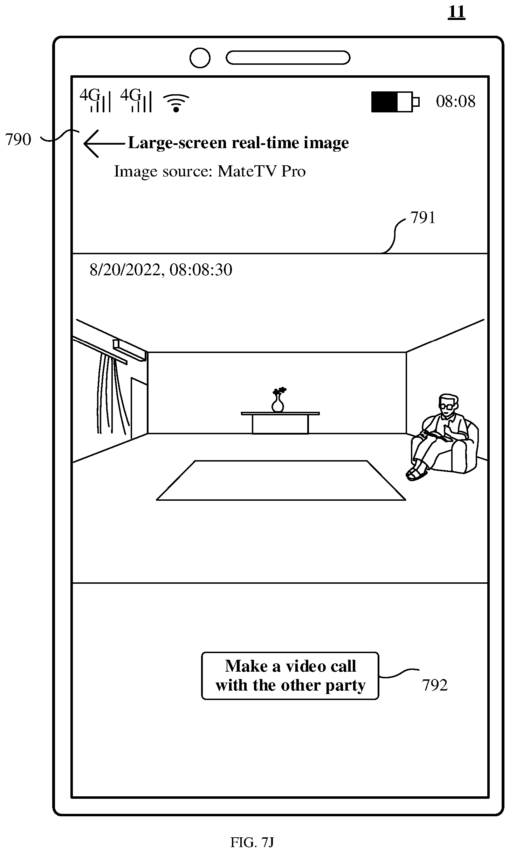

The electronic device 11 may receive a selection operation (for example, a tap) performed by the user on the video image option 781, and in response to the operation, the electronic device 11 may display a real-time image interface 790 shown in FIG. 7J. An image 791 collected by the large-screen device "MateTV Pro" in real time may be displayed on the real-time image interface 790.

Optionally, the real-time image interface 790 may further include a video call control 792. The video call control 792 may be configured to trigger the electronic device 11 to perform a video call with the large-screen device "MateTV Pro".

In an example, when the user selects a plurality of input devices (for example, the large-screen device "MateTV Pro" and the smart watch "MateWatch") on the real-time home scene function, the electronic device 11 may trigger the plurality of input devices to download respectively adapted plugins from a plugin combination for the real-time home scene. The electronic device 11 may receive a plurality of video streams collected and sent by the plurality of input devices. The electronic device 11 may display video image options of the plurality of input devices on the Real-time home scene function interface 780 shown in FIG. 7I, and on each video image option, a video stream collected by a corresponding input device in real time may be displayed.

FIG. 8A to FIG. 8C are a schematic flowchart of a plugin control method according to an embodiment of this application.

As shown in FIG. 8A to FIG. 8C, the plugin control method may be applied to a communication system including the plugin server 22 and a plurality of electronic devices. The plurality of electronic devices may include the electronic device 11 and the electronic device 12. A specified application of a version A may be run on the electronic device 11, and a specified application of a version B may be run on the electronic device 12. In an example, the version A and the version B may be the same, and in another example, the version A and the version B may be different. In this embodiment of this application, an example in which the electronic device 11 is a mobile phone "Mate50", and the electronic device 12 is a large-screen device "MateTV Pro" is used to describe a procedure of the plugin control method.

The plugin control method may include the following steps.

S801: The plugin server 22 may store a plugin combination for a plurality of cross-device functions and working configuration information of the plugin combination.

At least two plugins are needed to work together to implement the cross-device function. For example, the plurality of cross-device functions may include an interactive game function, an interactive media function, a real-time home scene function, a call transfer function, and a home body detection function.

The plugin combination may include a plugin of one or more versions for implementing the cross-device function. For example, a plugin combination for a real-time home scene function may include a plugin of a mobile phone version, a plugin of a large-screen version, a plugin of a watch version, a plugin of a home camera version, and a plugin of a vehicle-mounted version.

The work configuration information may describe one or more plugin working combinations that implement the cross-device function in the plugin combination. For example, the plugin combination may include a plugin A1 of the mobile phone version, a plugin A2 of the large-screen device version, and a plugin A3 of the watch version. The working configuration information of the plugin combination may indicate that the plugin A1 and the plugin A2 may support cross-device collaboration, the plugin A1 and the plugin A3 may implement cross-device collaboration, and the plugin A1, the plugin A2, and the plugin A3 may implement cross-device function, but the plugin A2 and the plugin A3 cannot implement cross-device function.

The foregoing example is merely used to explain this application, and should not constitute a limitation.

For specific descriptions of the plugin combination and the working configuration information, refer to the embodiment shown in FIG. 4. Details are not described herein again.

S802: The electronic device 11 may obtain device information of one or more discovered devices.

The electronic device 11 may discover the one or more devices near the electronic device 11 by using a near field communication technology (for example, Wi-Fi, Bluetooth, NFC, UWB, or infrared).

In an example, the electronic device 11 may alternatively discover the one or more devices in a local area network in which the electronic device 11 is located.

In an example, if the electronic device 11 and the one or more devices are connected to a server, the electronic device 11 may discover, through the server, the one or more devices that have been online. The one or more devices and the electronic device 11 may log in to a same account, or a login account of the one or more devices is bound to a login account of the electronic device 11.

The one or more devices discovered by the electronic device 11 each may communicate with the electronic device 11.

The device information may include one or more of the following: a device type, a device name, a storage capacity, whether a device is foldable, whether the device has a screen, whether the device has a camera, a screen resolution, a device security level, a type of an operating system of the device, a version number of the operating system, a version type of a specified application (for example, an AI life application), and the like.

S803: The electronic device 11 may send device information of a to-be-networked device to the plugin server 22.

The to-be-networked device may include the electronic device 11 and the one or more devices discovered by the electronic device 11.

S804: The plugin server 22 may select, based on the device information of the to-be-networked device, a plugin combination for one or more specified cross-device functions from the plugin combination for the plurality of cross-device functions.

The specified cross-device function is a cross-device function supported by at least two devices in the to-be-networked device. For example, the plurality of cross-device functions may include an interactive game function, an interactive media function, a real-time home scene function, a call transfer function, and a home body detection function. The to-be-networked device may include the electronic device 11 and the electronic device 12. A device type of the electronic device 11 is a mobile phone, and a device type of the electronic device 12 is a large-screen device. In the interactive game function, the interactive media function, and the real-time home scene function, the mobile phone and the large-screen device can be combined to work together. In the call transfer function and the home body detection function, the mobile phone and the large-screen device cannot be combined to work together. Therefore, the specified cross-device functions may include the interactive game function, the interactive media function, and the real-time home scene function.

S805: The plugin server 22 may send plugin combination information of the one or more specified cross-device functions to the electronic device 11.

S806: The electronic device 11 may display the plugin combination information of the one or more specified cross-device functions.

The plugin combination information may include one or more of the following items: a name of a specified cross-device function, a function description of the specified cross-device function, a device type supported by the specified cross-device function, a working combination option of the specified cross-device function, and the like.

In an example, the plugin server 22 may send the plugin combination information to the electronic device 11 in a form of page, and the electronic device 11 may display the plugin combination information of the specified cross-device function in the form of page. For example, for a page including the plugin combination information, refer to the Plugin market interface 750 shown in FIG. 7F or the Real-time home scene function interface 760 shown in FIG. 7G.

S807: The electronic device 11 may receive a selection operation that the user selects the electronic device 11 and the electronic device 12 to implement a first cross-device function.

For example, the first cross-device function may be the real-time home scene function. For the selection operation that the user selects the electronic device 11 and the electronic device 12 to implement the first cross-device function, refer to the operations on the selection control 762, the selection control 765, and the real-time home scene start control 771 in the embodiment shown in FIG. 7H. Details are not described herein again.

S808: In response to the selection operation, the electronic device 11 may determine whether a first plugin that is adapted to the electronic device 11 and that is in a first plugin combination corresponding to the first cross-device function is locally cached; and perform step S809 if the electronic device 11 determines that the first plugin that is adapted to the electronic device 11 and that is in the first plugin combination corresponding to the first cross-device function is not locally cached, or perform step S811 if the electronic device 11 determines that the first plugin that is adapted to the electronic device 11 and that is in the first plugin combination corresponding to the first cross-device function is locally cached.

For example, the device type of the electronic device 11 may be a mobile phone, and the first plugin may be a plugin of a mobile phone version in the first plugin combination.

In this embodiment of this application, that the plugin is adapted to the electronic device and the plugin is adapted to the specified application on the electronic device may mean that the specified application on the electronic device may run the plugin. For example, that the first plugin is adapted to the electronic device 11 may mean that a specified application of a version A on the electronic device 11 may support running of the first plugin. That a second plugin is adapted to the electronic device 12 may mean that a specified application of a version B on the electronic device 12 may support running of the second plugin. However, the specified application of the version A on the electronic device 11 does not support running of the second plugin, and the specified application of the version B on the electronic device 12 does not support running of the first plugin.

S809: When the electronic device 11 does not locally cache the first plugin, the electronic device 11 may send a download request 1 to the plugin server 22. The download request 11 may be used to request to download the first plugin in the first plugin combination from the plugin server 22.

S810: After receiving the download request 1, the plugin server 22 may send the first plugin to the electronic device 11.

S811: The electronic device 11 sends, to the electronic device 12, plugin information of the second plugin that is in the first plugin combination and that is adapted to the electronic device 12.

The plugin information of the second plugin includes a plugin identifier of the second plugin, and the like.

For example, the device type of the electronic device 12 may be a large-screen device, and the second plugin may be a plugin of a large-screen version in the first plugin combination.

S812: After receiving the plugin information of the second plugin, the electronic device 12 may determine whether the second plugin is locally cached; and perform step S813 if the electronic device 12 determines that the second plugin is not locally cached, or perform step S820 if the electronic device 12 determines that the second plugin is locally cached.

S813: When the electronic device 12 does not locally cache the second plugin, the electronic device 12 may determine whether the electronic device 12 has a capability of downloading a plugin over the internet; and perform step S814 if the electronic device 12 determines that the electronic device 12 does not have the capability of downloading a plugin over the internet, or perform step S818 if the electronic device 12 determines that the electronic device 12 has the capability of downloading a plugin over the internet.

S814: When the electronic device 12 does not have the capability of downloading a plugin over the internet, the electronic device 12 may send a download assistance request to the electronic device 11. The download assistance request is used to request the electronic device 11 to assist the electronic device 12 in downloading the second plugin.

S815: After receiving the download assistance request, the electronic device 11 may send a download request 2 to the plugin server 22. The download request 2 may be used to request to download the second plugin from the plugin server 22.

S816: After receiving the download request 2, the plugin server 22 may send the second plugin to the electronic device 11.

S817: After receiving the second plugin sent by the plugin server 22, the electronic device 11 may send the second plugin to the electronic device 12.

S818: When the electronic device 12 has the capability of downloading a plugin over the internet, the electronic device 12 may send a download request 3 to the plugin server 22. The download request 3 may be used to request to download the second plugin from the plugin server 22.

S819: After receiving the download request 3, the plugin server 22 may send the second plugin to the electronic device 12.

S820: After the electronic device 12 obtains the second plugin, the electronic device 12 may send feedback information to the electronic device 11. The feedback information may indicate that the electronic device 12 has obtained the second plugin.

S821: After receiving the feedback information, the electronic device 11 may send a plugin start notification and networking information to the electronic device 12 through the specified application of the version A. The plugin start notification may indicate the electronic device 12 to start the second plugin.

The networking information may include device identifiers (for example, SN numbers, MAC addresses, or IP addresses) and networking authentication credential information of a plurality of networked devices that are specified by the user for implementing the first cross-device function. The device identifiers of the plurality of networked devices include a device identifier of the electronic device 11 and a device identifier of the electronic device 12. The networking authentication credential information is used to complete plugin layer authentication between plugins on the plurality of networked devices. After the plugin layer authentication is completed between the plugins (for example, between the first plugin and the second plugin) on the plurality of networked devices, the plugins on the plurality of networked devices may complete networking connection, to execute the first cross-device function.

S822: The electronic device 11 may start the first plugin through the specified application of the version A.

Step S822 may be performed before step S821, or may be performed after step S821. This is not limited herein.

S823: After receiving the plugin start notification, the electronic device 12 may start the second plugin through the specified application of the version B.

S824: The first plugin and the second plugin complete networking authentication.

The first plugin and the second plugin may complete plugin layer networking authentication based on the device identifiers and the networking authentication credential information of the plurality of networked devices. For example, the networking authentication credential information may include a specified system account. When the first plugin verifies that a locally logged-in system account of the electronic device 11 is consistent with the specified system account, and the second plugin verifies that a locally logged-in system account of the electronic device 12 is consistent with the specified system account, the first plugin and the second plugin complete networking authentication. In this embodiment of this application, a manner of networking authentication between the first plugin and the second plugin may not be limited to the example. There may be another authentication manner. This is not limited herein.

S827: The first plugin and the second plugin complete networking connection.

After the first plugin and the second plugin complete networking authentication, the first plugin and the second plugin may establish a plugin layer networking connection based on the device identifiers and the networking authentication credential information of the plurality of networked devices. The networking connection may be a short-distance communication connection, for example, a Bluetooth connection, a Wi-Fi connection, or a UWB connection. The networking connection may alternatively be a long-distance connection, for example, a relay link connection established through the server. In an example, the networking connection may alternatively be a converged connection in the foregoing plurality of communication manners.

S828: The first plugin and the second plugin execute the first cross-device function.

For example, the first cross-device function may be the real-time home scene function. For descriptions of the real-time home scene function, refer to the embodiment shown in FIG. 7A to FIG. 7J. Details are not described herein again.

In some embodiments, after the first cross-device function is executed through the first plugin on the electronic device 11 and the second plugin on the electronic device 12, the electronic device 11 and the electronic device 12 may actively delete the first plugin and the second plugin. Optionally, the electronic device 11 may delete the first plugin when detecting that the first plugin is not used within a preset time (for example, one month), and the electronic device 12 may delete the second plugin when detecting that the second plugin is not used within a preset time (for example, one month). In this way, after the plugins are used by the electronic device 11 and the electronic device 12, the plugins may be deleted in time, to save storage space.

In some embodiments, after the first cross-device function is executed through the first plugin on the electronic device 11 and the second plugin on the electronic device 12, the electronic device 11 may receive and respond to an operation of the user, to delete the first plugin, and send a deletion notification to the electronic device 12, to indicate the electronic device 12 to delete the second plugin. In this way, after the plugins are used by the electronic device 11 and the electronic device 12, the user may choose to delete an unwanted plugin, to save storage space.

In embodiments of this application, a quantity of networked devices is not limited to two, and there may be more networked devices, for example, the electronic device 11, the electronic device 12, or an electronic device 13. This is not limited herein. For a process of downloading a plugin by another device, refer to a process of downloading the plugin by the electronic device 12 in the embodiment. For a process of performing networking authentication and networking connection by the another device, refer to a process of networking authentication and networking connection between the electronic device 11 and the electronic device 12 in the embodiment. Details are not described herein again.

Embodiments of this application provide a plugin control method, and a specified application may be installed on each of the electronic device 11 and another device. The electronic device 11 may receive an input of a user, and download specified plugins for implementing a same cross-device function to the electronic device 11 and the another device through specified application respectively. The electronic device 11 may run a downloaded specified plugin through a local specified application, and indicate the another device to also run a downloaded specified plugin through an installed specified application. The electronic device 11 may implement the cross-device function through the local specified plugin and the specified plugin on the another device. In this way, the user may trigger, on the electronic device 11 for both the electronic device 11 and the another device, downloading of the plugin for implementing the specified cross-device function, and the user can quickly implement the cross-device function with the another device.

The following describes, with reference to another application scenario, a plugin control method provided in embodiments of this application.

In an application scenario, a specified application may be installed on each of the electronic device 11 and another device. One or more plugins supported by a specified application on the another device are presented on a local specified application on the electronic device 11. The electronic device may control, through a local specified application, the another device to download a specified plugin. The electronic device 11 may control, through the local specified application, the another device to start and run the specified plugin. In this way, a user may control, on the electronic device 11, the another device to download the specified plugin, to help the user quickly endow the another device with a new function and start the new function.

FIG. 9 is a diagram of a principle of a plugin control method according to an embodiment of this application.

As shown in FIG. 9, the electronic device 11 and a robot device 14 are used as an example. The plugin control method may include the following steps.
1. A plugin developer may release one or more robot plugins to the plugin server 22. Different robot plugins may control the robot device 14 to implement different robot functions. For example, the one or more robot plugins may include a robot sweep plugin, a robot care-giving plugin, and a robot cooking plugin. The robot sweep plugin may control a robot to sweep a floor, the robot care-giving plugin may control the robot to monitor a dangerous behavior of a person and output a danger alarm, and the robot cooking plugin may control the robot to cook, and the like.
2. The plugin server 22 may push presentation information of the one or more robot plugins to a specified application on the electronic device 11.

A version of the specified application on the electronic device 11 is different from a version of a specified application on the robot device 14. For example, a specified application of a version A is installed on the electronic device 11, and a specified application of a version B is installed on the robot device 14.

The presentation information of the robot plugin may include one or more of the following: a name of the robot plugin, a function description of the robot plugin, a type of a device supporting the robot plugin, and the like.

In an example, the electronic device 11 may obtain device information of the robot device 14, and send the device information of the robot device 14 to the plugin server 22. The plugin server 22 determines, based on the device information of the robot device 14, one or more robot plugins supported by the robot device 14. The plugin server 22 may send the presentation information of the one or more robot plugins to the electronic device 11.

The device information may include one or more of the following: a device type, a device name, a storage capacity, whether a device is foldable, whether the device has a screen, whether the device has a camera, a screen resolution, a device security level, a type of an operating system of the device, a version number of the operating system, a version type of a specified application (for example, an AI life application), and the like.
3. The electronic device 11 may display the presentation information of the robot plugins on an interface of the specified application, and receive an input of selecting a specified robot plugin by a user.
4. In response to the input of selecting the specified robot plugin by the user, the electronic device 11 may send plugin information of the specified robot plugin to the robot device 14.

The plugin information of the specified robot plugin may include an identifier of the specified robot plugin, and the like.

5. The robot device 14 may download, start, and run the specified robot plugin through the specified application of the version B.

In an example, after receiving the plugin information of the specified robot plugin, the robot device 14 may determine whether the robot device 14 locally caches the specified robot plugin. If the robot device 14 locally caches the specified robot plugin, the robot device 14 may directly start and run the specified robot plugin through the specified application of the version B.

If the robot device 14 does not locally cache the specified robot plugin, and the robot device 14 has a capability of downloading a plugin over the internet, the robot device 14 may download the specified robot plugin from the plugin server 22, and start and run the specified robot plugin through the specified application of the version B.

If the robot device 14 does not locally cache the specified robot plugin, and the robot device 14 does not have the capability of downloading a plugin over the internet, the robot device 14 may send a download assistance request to the electronic device 11. The download assistance request may be used to request the electronic device 11 to download the specified robot plugin from the plugin server 22, and forward the specified robot plugin to the robot device 14. After receiving the specified robot plugin sent by the electronic device 11, the robot device 14 may start and run the specified robot plugin through the specified application of the version B.

After the robot device 14 starts and runs the specified robot plugin through the specified application of the version B, the robot device 14 may execute, through the specified robot plugin, a robot function (for example, a sweep function, a care-giving function, or a cooking function) corresponding to the specified robot plugin.

In embodiments of this application, the plugin control method is not limited to a plugin control scenario of the electronic device 11 and the robot device 14, and may be further applied to another control scenario, for example, a plugin control scenario of the electronic device 11 and a vehicle 15.

FIG. 10 is a diagram of a principle of a plugin control method according to an embodiment of this application.

As shown in FIG. 10, the electronic device 11 and a vehicle 15 are used as an example. The plugin control method may include the following steps.
1. A plugin developer may release one or more vehicle plugins to the plugin server 22. Different vehicle plugins may control the vehicle 15 to implement different vehicle functions. For example, the one or more vehicle plugins may include an autonomous driving plugin, a pedestrian detection plugin, and an automatic parking plugin. The autonomous driving plugin may provide an autonomous driving function for the vehicle 15. The pedestrian detection plugin may provide a pedestrian detection function for the vehicle 15 in a driving process, and control the vehicle 15 to brake when a distance between the vehicle 15 and a pedestrian is a preset distance. The automatic parking plugin may provide an automatic parking function for the vehicle 15, and the like.
2. The plugin server 22 may push presentation information of the one or more vehicle plugins to a vehicle application on the electronic device 11.

A version of the vehicle application on the electronic device 11 is different from a version of a vehicle application on the vehicle 15. For example, a vehicle application of a version A is installed on the electronic device 11, and a vehicle application of a version B is installed on the vehicle 15.

The presentation information of the vehicle plugin may include one or more of the following: a name of the vehicle plugin, a function description of the vehicle plugin, a type of a device supporting the vehicle plugin, and the like.

In an example, the electronic device 11 may obtain device information of the vehicle 15, and send the device information of the vehicle 15 to the plugin server 22. The plugin server 22 determines, based on the device information of the vehicle 15, one or more vehicle plugins supported by the vehicle 15. The plugin server 22 may send the presentation information of the one or more vehicle plugins to the electronic device 11.

The device information may include one or more of the following: a device type, a device name, a storage capacity, whether a device is foldable, whether the device has a screen, whether the device has a camera, a screen resolution, a device security level, a type of an operating system of the device, a version number of the operating system, a version type of a specified application (for example, a vehicle application), and the like.
3. The electronic device 11 may display the presentation information of the vehicle plugins on an interface of the vehicle application, and receive an input of selecting and purchasing a specified vehicle plugin by a user.
4. In response to the input of selecting and purchasing the specified vehicle plugin by the user, the electronic device 11 may send plugin information of the specified vehicle plugin to the vehicle 15.

The plugin information of the specified vehicle plugin may include an identifier of the specified vehicle plugin, and the like.

5. The vehicle 15 may download, start, and run the specified vehicle plugin through the vehicle application of the version B.

In an example, after receiving the plugin information of the specified vehicle plugin, the vehicle 15 may determine whether the vehicle 15 locally caches the specified vehicle plugin. If the vehicle 15 locally caches the specified vehicle plugin, the vehicle 15 may directly start and run the specified vehicle plugin through the vehicle application of the version B.

If the vehicle 15 does not locally cache the specified vehicle plugin, and the vehicle 15 has a capability of downloading a plugin over the internet, the vehicle 15 may download the specified robot plugin from the plugin server 22, and start and run the specified vehicle plugin through the specified application of the version B.

If the vehicle 15 does not locally cache the specified vehicle plugin, and the vehicle 15 does not have the capability of downloading a plugin over the internet, the vehicle 15 may send a download assistance request to the electronic device 11. The download assistance request may be used to request the electronic device 11 to download the specified vehicle plugin from the plugin server 22, and forward the specified vehicle plugin to the vehicle 15. After receiving the specified vehicle plugin sent by the electronic device 11, the vehicle 15 may start and run the specified vehicle plugin through the vehicle application of the version B in a driving process.

After the vehicle 15 starts and runs the specified vehicle plugin through the specified application of the version B, the vehicle 15 may perform, through the specified vehicle plugin, a vehicle function (for example, an autonomous driving function, a pedestrian detection function, or an automatic parking function) corresponding to the specified vehicle plugin.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A plugin control method, applied to a first electronic device on which a first application is run, and comprising:
receiving a first operation that a user selects the first electronic device and a second electronic device to execute the first cross-device function, wherein a first plugin combination for the first cross-device function comprises a first plugin for which running is supported by the first application and a second plugin for which running is supported by a second application installed on the second electronic device;
in response to the first operation, sending a first download request to a plugin server and sending plugin information of the second plugin to the second electronic device, wherein the first download request is used to request to download the first plugin, and the plugin information of the second plugin is used by the second electronic device to download the second plugin from the plugin server;
receiving the first plugin sent by the plugin server;
after receiving the first plugin, starting and running the first plugin through the first application; and
executing the first cross-device function through the first plugin and the second plugin that is started and run through the second application on the second electronic device.

2. The method according to claim 1, wherein before the receiving a first operation that a user selects the first electronic device and a second electronic device to execute the first cross-device function, the method further comprises:
obtaining device information of a to-be-networked device, wherein the to-be-networked device comprises the first electronic device and the second electronic device;
sending the device information of the to-be-networked device to the plugin server;
receiving plugin combination information of one or more specified cross-device functions sent by the plugin server, wherein the one or more specified cross-device functions comprise the first cross-device function; and
displaying the plugin combination information of the one or more specified cross-device functions.

3. The method according to claim 1 or 2, wherein after the sending plugin information of the second plugin to the second electronic device, the method further comprises:
receiving a download assistance request sent by the second electronic device, wherein the download assistance request is used to request the first electronic device to download the second plugin and forward the second plugin to the second electronic device;
sending a third download request to the plugin server, wherein the third download request is used to request to download the second plugin;
receiving the second plugin sent by the plugin server; and
sending the second plugin to the first electronic device.

4. The method according to any one of claims 1 to 3, wherein before the executing the first cross-device function through the first plugin and the second plugin that is on the second electronic device, the method comprises:
receiving feedback information sent by the second electronic device, wherein the feedback information indicates that the second electronic device has obtained the second plugin.

5. The method according to claim 4, wherein after the receiving feedback information sent by the second electronic device, the method further comprises:
sending a first start notification to the second electronic device, wherein the first start notification indicates the second electronic device to start and run the second plugin.

6. The method according to any one of claims 1 to 5, wherein before the executing the first cross-device function through the first plugin and the second plugin that is started and run through the second application on the second electronic device, the method further comprises:
completing networking authentication through the first plugin and the second plugin; and
establishing a networking connection through the first plugin and the second plugin.

7. The method according to any one of claims 1 to 6, wherein the executing the first cross-device function through the first plugin and the second plugin that is started and run through the second application on the second electronic device specifically comprises:
receiving, through the first plugin, environment information that is collected by the second electronic device in real time through a camera and/or a microphone and that is sent by the second plugin, wherein the environment information comprises any one of the following: an audio stream, an image stream, and a video stream; and
controlling, through the first plugin, the first electronic device to output the environment information.

8. The method according to any one of claims 1 to 7, wherein the sending a first download request to a plugin server and sending plugin information of the second plugin to the second electronic device, in response to the first operation specifically comprises:
in response to the first operation, if it is determined that the first plugin is not cached on the first electronic device, sending the first download request to the plugin server, and sending the plugin information of the second plugin to the second electronic device.

9. The method according to claim 8, wherein the method further comprises:
in response to the first operation, if it is determined that the first plugin is cached on the first electronic device, sending the plugin information of the second plugin to the second electronic device.

10. The method according to any one of claims 1 to 9, wherein after the executing the first cross-device function through the first plugin and the second plugin that is started and run through the second application on the second electronic device, the method further comprises:
locally deleting the first plugin.

11. The method according to any one of claims 1 to 10, wherein after the executing the first cross-device function through the first plugin and the second plugin that is started and run through the second application on the second electronic device, the method further comprises:
sending a deletion notification to the second electronic device, wherein the deletion notification indicates the second electronic device to delete the second plugin.

12. A plugin control system, comprising a plugin server, a first electronic device, and a second electronic device, wherein a first application is run on the first electronic device, and a second application is run on the second electronic device;
the plugin server is configured to store a plugin combination for a plurality of cross-device functions, wherein the plugin combination comprises a plugin of one or more versions, the plurality of cross-device functions comprise a first cross-device function, and a first plugin combination for the first cross-device function comprises a first plugin for which running is supported by the first application and a second plugin for which running is supported by the second application;
the first electronic device is configured to receive a first operation that a user selects the first electronic device and the second electronic device to execute the first cross-device function;
the first electronic device is further configured to: in response to the first operation, send a first download request to the plugin server, and send plugin information of the second plugin to the second electronic device, wherein the first download request is used to request to download the first plugin;
the plugin server is further configured to: after receiving the first download request, send the first plugin to the first electronic device;
the second electronic device is configured to: after receiving the plugin information of the second plugin, send a second download request to the plugin server, wherein the second download request is used to request to download the second plugin;
the plugin server is further configured to: after receiving the second download request, send the second plugin to the second electronic device;
the first electronic device is further configured to: after receiving the first plugin, start and run the first plugin through the first application;
the second electronic device is further configured to: after receiving the second plugin, start and run the second plugin through the second application; and
the first electronic device is further configured to execute the first cross-device function through the first plugin and the second plugin.

13. The system according to claim 12, wherein the first electronic device is further configured to obtain device information of a to-be-networked device before receiving the first operation that the user selects the first electronic device and the second electronic device to execute the first cross-device function, wherein the to-be-networked device comprises the first electronic device and the second electronic device;
the first electronic device is further configured to send the device information of the to-be-networked device to the plugin server;
the plugin server is further configured to determine, from the plugin combination for the plurality of cross-device functions based on the device information of the to-be-networked device, a plugin combination for one or more specified cross-device functions supported by the to-be-networked device, wherein the plugin combination for the one or more specified cross-device function comprises the first plugin combination for the first cross-device function;
the plugin server is further configured to send plugin combination information of the one or more specified cross-device functions to the first electronic device; and
the first electronic device is further configured to display the plugin combination information of the one or more specified cross-device functions.

14. The system according to claim 12 or 13, wherein the second electronic device is specifically configured to: after receiving the plugin information of the second plugin, if it is determined that the second plugin is not cached on the second electronic device and the second electronic device has a capability of downloading a plugin over the internet, send the second download request to the plugin server.

15. The system according to claim 14, wherein the second electronic device is further configured to: after receiving the plugin information of the second plugin, if it is determined that the second plugin is not cached on the second electronic device and the second electronic device does not have the capability of downloading a plugin over the internet, send a download assistance request to the first electronic device, wherein the download assistance request is used to request the first electronic device to download the second plugin and forward the second plugin to the second electronic device;
the first electronic device is further configured to: after receiving the download assistance request, send a third download request to the plugin server, wherein the third download request is used to request to download the second plugin;
the plugin server is further configured to: after receiving the third download request, send the second plugin to the first electronic device; and
the first electronic device is further configured to: after receiving the second plugin, send the second plugin to the second electronic device.

16. The system according to claim 14, wherein the second electronic device is further configured to: after receiving the plugin information of the second plugin, if it is determined that the second plugin is cached on the second electronic device, send feedback information to the first electronic device, wherein the feedback information indicates that the second electronic device has obtained the second plugin.

17. The system according to any one of claims 12 to 15, wherein the second electronic device is further configured to: after receiving the second plugin, send feedback information to the first electronic device, wherein the feedback information indicates that the second electronic device has obtained the second plugin.

18. The system according to claim 16 or 17, wherein the first electronic device is further configured to: after receiving the feedback information, send a first start notification to the second electronic device, wherein the first start notification indicates the second electronic device to start and run the second plugin; and
the second electronic device is specifically configured to: after receiving the first start notification, start and run the second plugin through the second application.

19. The system according to any one of claims 12 to 18, wherein the first electronic device is further configured to complete networking authentication through the first plugin and the second plugin before the first cross-device function is executed through the running first plugin and the second plugin that is run on the second electronic device; and
the first electronic device is further configured to establish a networking connection through the first plugin and the second plugin after the networking authentication is completed through the first plugin and the second plugin.

20. The system according to any one of claims 12 to 19, wherein the executing the first cross-device function through the first plugin and the second plugin specifically comprises:
controlling, by the second plugin, the second electronic device to collect environment information in real time through a camera and/or a microphone, wherein the environment information comprises any one of the following: an audio stream, an image stream, and a video stream;
sending, by the second plugin to the first plugin, the environment information collected by the second electronic device in real time through the camera and/or the microphone; and
controlling, by the first plugin, the first electronic device to output the environment information.

21. The system according to any one of claims 12 to 20, wherein the first electronic device is specifically configured to: in response to the first operation, if it is determined that the first plugin is not cached on the first electronic device, send the first download request to the plugin server, and send the plugin information of the second plugin to the second electronic device.

22. The system according to claim 21, wherein the first electronic device is further configured to: in response to the first operation, if it is determined that the first plugin is cached on the first electronic device, send the plugin information of the second plugin to the second electronic device.

23. The system according to any one of claims 12 to 22, wherein the first electronic device is further configured to locally delete the first plugin after executing the first cross-device function through the first plugin and the second plugin.

24. The system according to any one of claims 12 to 23, wherein the first electronic device is further configured to send a deletion notification to the second electronic device after executing the first cross-device function through the first plugin and the second plugin, wherein the deletion notification indicates the second electronic device to delete the second plugin; and
the second electronic device is further configured to delete the second plugin after receiving the deletion notification.

25. An electronic device, wherein the electronic device is a first electronic device, and the electronic device comprises a transceiver, one or more processors, and one or more memories, the transceiver and the one or more memories are coupled to the one or more processors, the one or more memories are configured to store computer program code, the computer program code comprises computer instructions, and when the one or more processors execute the computer instructions, the method according to any one of claims 1 to 11 is implemented.

26. A computer storage medium, wherein the computer storage medium stores computer instructions, and when the computer instructions are executed by a processor, the method according to any one of claims 1 to 11 is implemented.
